# EUROPÄISCHE PATENTSCHRIFT

(11) **EP 2 532 124 B1**
(45) Veröffentlichungstag und Bekanntmachung des Hinweises auf die Patenterteilung: **23.08.2017**
(21) Anmeldenummer: 11710861.3
(22) Anmeldetag: 25.01.2011
(51) Int. Cl.: H04L 12/40, H04L 12/403, H04L 12/10, H04L 29/12, H04L 12/773

(54) **ADRESSIERBARE KNOTENEINHEIT UND VERFAHREN ZUM ADRESSIEREN**
ADDRESSABLE NODE UNIT AND ADDRESSING METHOD
UNITÉ NOEUD ADRESSABLE ET PROCÉDÉ D'ADRESSAGE

(30) Priorität: 04.02.2010 CH 128102010
(43) Veröffentlichungstag der Anmeldung: 12.12.2012
(73) Patentinhaber: Radicos Technologies GmbH, 1060 Wien (AT)
(72) Erfinder: TRAN, Luan-Vu, 1302 Vufflens-la-Ville (CH); HAMMER, Walter, CH-2073 Enges (CH)
(74) Vertreter: Keschmann, Marc
(86) Internationale Anmeldenummer: PCT/IB2011/000108
(87) Internationale Veröffentlichungsnummer: WO 2011/095857

(56) Entgegenhaltungen:
- WO-A1-90/01245
- WO-A2-2005/024749
- DE-A1- 19 647 668

## Beschreibung

Die Erfindung bezieht sich auf eine adressierbare Knoteneinheit nach dem Oberbegriff des Anspruches 1. Eine derartige Knoteneinheit ist beispielsweise aus der WO 2009/065236 bekannt geworden, die hier durch Bezugnahme als geoffenbart gelten soll. Knoteneinheiten dieser Art dienen entweder als Sensoren (bzw. beinhalten sie einen solchen), um das Auftreten eines Ereignisses und den Ort dieses Ereignisses genau überwachen zu können, wobei im allgemeinen zu diesem Zwecke eine Vielzahl solcher Knoteneinheiten in Abständen voneinander entlang eines Kabels oder Busses angeordnet sind. Es kann sich allerdings auch um den Fall handeln, dass die jeweilige Knoteneinheit an einem bestimmten Ort eine Steuerung durchführt, etwa ein Ventil, z.B. zum Versprühen von Löschwasser, öffnet oder einen Raumabschluss, etwa einen Feuerschutzvorhang, betätigt, und so in jedem Fall als Aktor (dieses Wort soll nachstehend allgemein für solche Betätigungen verwendet werden) dient. DE19647668 A1 beschreibt ein Bussystem mit einer Masterstation und mehreren Slave-Stationen. Die Slave-Stationen verfügen über einen Anschlussschalter. Wenn der Anschlussschalter einer ersten Slave-Station geöffnet ist, haben die folgenden Slave-Stationen keinen elektrischen Kontakt mehr mit der Masterstation. Die erste Slave-Station wird in dieser Phase initialisiert.

WO2005/024749 A2 beschreibt einen Sensor, der seine Leistung über die Leitung empfängt und seine Senderkomponente überträgt Daten mit einem unidirektionalen seriellen Protokoll, sobald der Sensor Strom empfangen hat. Nach einer vordefinierten Sendezeit wechselt der Sensor in einen Stillstand und aktiviert einen Schalter, so dass ein zweite Sensor in Serie aktiviert wird und den ersten Leistungspegel empfangen kann.

Im obigen Stand der Technik ist nichts über die Art der Adressierung gesagt. Bisher sind aber hauptsächlich zwei Adressierungssysteme im Gebrauch: Entweder es wird jeder Knoteneinheit eine, z.B. binäre, Adresse zugeordnet, die von einem Kontroller, wie einem Mikroprozessor, einem Computer od.dgl., mit einem entsprechenden, z.B. binären, Signal abgerufen wird. Eine vereinfachte Lösung sieht ein Adressiersignal vor, dessen Amplitude sich durch Leitungswiderstands-Verluste, derart verändert, dass die Amplitude selbst zur Adressierung herangezogen werden kann.

Während das erstgenannte Adressiersystem etwas aufwändig ist, lässt sich das zweite nicht ohne zusätzliche Maßnahmen bei verzweigten Leitungen einsetzen und ist auch für eine digitale Übermittlung der Adresse nicht geeignet.
Der Erfindung liegt daher die Aufgabe zugrunde, eine Knoteneinheit zu schaffen, die geeignet ist, ein digitales Adressiersignal zu erhalten, wobei die Adressierung zweckmäßig vereinfacht sein soll, vor allem aber gesichert ist, dass die jeweilige auswertende Schaltung auch im Ruhezustand ausreichend mit Strom versorgt wird. Dies gelingt erfindungsgemäß durch die kennzeichnenden Merkmale des Anspruches 1.

Der vom Adressiersignal, das ja nun ganz einfach sein kann und keinerlei Adressencodes bedarf, betätigte Schalter sichert, dass das Adressiersignal zunächst die jeweils erste Knoteneinheit in einer Reihe solcher Einheiten erhält, beim nächsten Mal aber die Adressierung an die nächste Knoteneinheit weitergibt. In diesem Augenblick aber wäre die erste Knoteneinheit - ohne besondere zusätzliche Maßnahmen - von der Strom zuführenden Leitung abgeschnitten. Um dennoch ihre Minimalversorgung zu sichern, ist der mindestens eine Stromspeicher vorgesehen.

Dieser Stromspeicher könnte an sich ein Akkumulator bzw. eine aufladbare Batterie sein, wird aber bevorzugt von mindestens einer Kapazität, vorzugsweise mindestens einem Kondensator, gebildet. Wenn hier ein Unterschied zwischen einer Kapazität und einem Kondensator gemacht wird, so soll unter dem ersteren Begriff generell alles verstanden werden, das geeignet ist eine so große Kapazität aufzubauen, um den benötigten Strom bereitstellen zu können. Dies kann beispielsweise auch eine Akkumulatorschaltung (aufladbare Batterie) sein.

Um zu sichern, dass der gespeicherte Strom auch wirklich zur Versorgung der auswertenden Schaltung im Zeitraum bis zur nächsten eigenen Adressierung ausreicht, weist die Knoteneinheit vorteilhaft eine zwischen die Leitungen und die auswertende Schaltung gelegte Umschalteinheit auf, durch welche der Stromverbrauch der auswertenden Schaltung nach dem Öffnen des vom Adressiersignal betätigbaren Schalters herabsetzbar ist.

Nach einem weiteren Aspekt der Erfindung ist ein Verfahren zum Adressieren einer von mindestens zwei der oben erläuterten Knoteneinheiten so ausgestaltet, dass für die Adressierung von einem Kotroller ein erstes Signal abgegeben wird, welches an die erste Knoteneinheit gelangt, in welcher das erste Signal der auswertenden Schaltung zugeführt, hingegen die Weitervermittlung dieses ersten Signales an die zweite Knoteneinheit unterbrochen wird, worauf der Controller ein zweites, vom ersten verschiedenes Signal abgibt, womit die Verbindung zur nächsten Knoteneinheit hergestellt, gleichzeitig oder zuvor aber der Adressiersignalweg zur auswertenden Schaltung der ersten Knoteneinheit unterbrochen wird, so dass das adressierende erste Signal des Controllers nun die zweite Knoteneinheit adressiert, und dass zuletzt die Verbindung zwischen Kontroller und auswertender Schaltung der ersten Knoteneinheit für die nächste Adressierung wieder hergestellt wird. Mit diesem Verfahren ist eine - gegenüber dem Stande der Technik - überragend rasche Adressierung möglich.

Weitere Einzelheiten der Erfindung ergeben sich an Hand der nachfolgenden Beschreibung eines in der Zeichnung schematisch dargestellten bevorzugten Ausführungsbeispiels. Es zeigen:
- Fig. 1: ein Ausführungsbeispiel einer erfindungsgemäßen Knoteneinheit;
- Fig. 2a: die Spannungs- (U) und Stromdiagramme der über die Leitungen 17, 18 der Fig. 1 fliessenden Signale;
- Fig. 2b: die Signalform an einzelnen Komponenten der Schaltung nach Fig. 1;
- Fig. 3: mehrere an einer Zweidraht-Leitung hintereinander liegende Knoteneinheiten, welche von mindestens einem Kontroller nacheinander adressiert werden;
- Fig. 4: eine Ausführungsvariante zu Fig. 1 in der besonderen Anwendung als Aktor; und
- Fig. 5: ein bevorzugtes Schaltdiagramm für einen Controller;
- Fig. 6: Varianten der Ausführungsformen für die Schalter; und
- Fig. 7: eine Ausführungsform der Erfindung mit doppelten Schaltern und Stromspeichern.

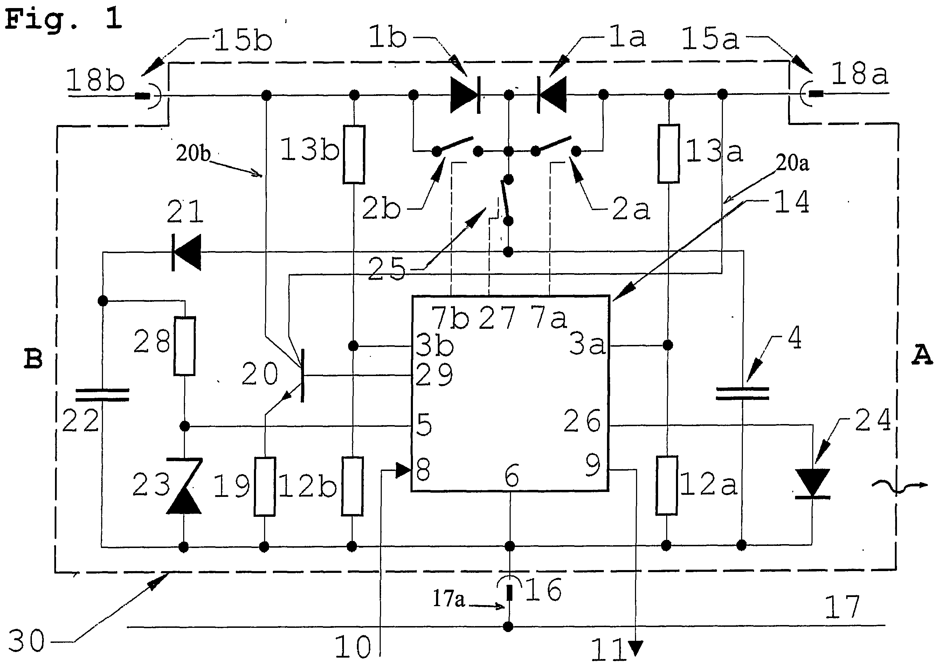

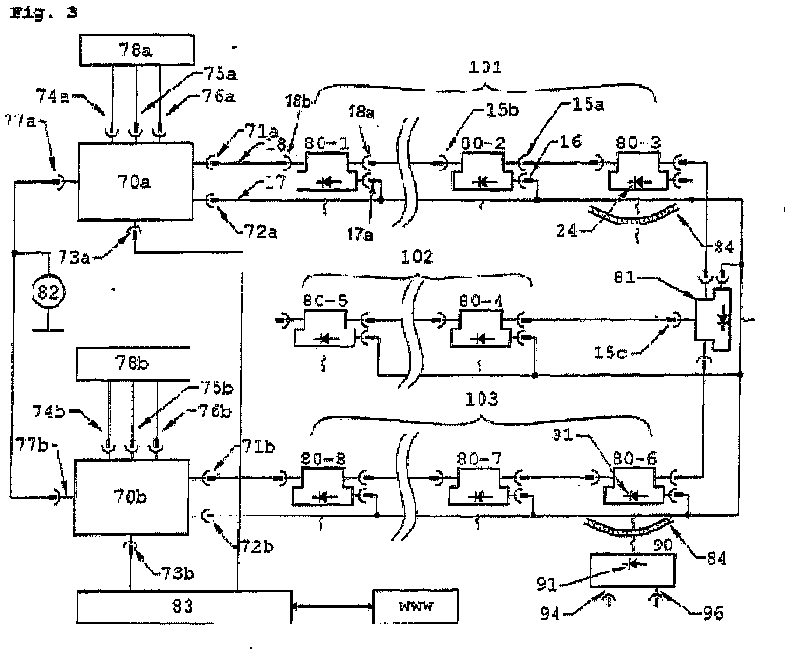

In Fig. 1 sind Signalleitungen bzw. Anschlüsse 18a, 18b, bzw. wenigstens die Signalleitung 18b von ihnen, an einen nicht dargestellten Controller (70a bzw. 70b in Fig. 3, z.B. vom Typ LUMINARY MICRO der Firma Texas Instruments) angeschlossen. Diese Leitungen 18a, 18b entsprechen der jeweiligen Seite A bzw. B dieser Sensorschaltung bzw. Knoteneinheit 30. Die Schaltung 30 ist, wie ersichtlich, vorzugsweise lösbar über Steckverbindungen 15a, 15b und 16 mit den Anschlüssen 18a, 18b sowie einer negativen Signalleitung 17 verbunden, wie dies in einer gleichzeitig eingereichten Patentanmeldung desselben Anmelders im einzelnen geschildert wird. Es versteht sich, dass natürlich die Funktion der Leitungen 17, 18a, 18b umgekehrt sein kann, d.h. dass die Leitung 17 positive Spannung führt und die Leitungen 18a, 18b die negative. Auch versteht es sich, dass die Leitungen 17, 18 zweckmässig abgeschirmt sind. Diesbezüglich wird auch auf die gleichzeitig eingereichte Patentanmeldung desselben Anmelders verwiesen.

Bei manchen Ausführungen mag es vorteilhaft sein, wenn nur die Leitungen 18a, 18b über Steckverbindungen angeschlossen werden, wogegen der Ausgang 6 unmittelbar mit der negativen Leitung 17 verbunden, beispielsweise verlötet, ist, weil dadurch etwaige Zugspannungen in Längsrichtung sich nicht auf die Positionierung der Knoteneinheit 30 auswirken. Natürlich ist die Erfindung nicht auf Steckverbindungen beschränkt, sondern es können auch die Steckverbindungen 15a, 15b wegfallen. Doch auch bei Anordnung einer Steckverbindung 16 ist es vorteilhaft, wenn dies in der dargestellten Weise über eine Zweigleitung 17a erfolgt, so dass die Leitung 17 ununterbrochen ist und so Zugspannungen aufzunehmen vermag.

Die Leitung 18a kann entweder an einen weiteren Controller (70b in Fig. 3) oder im Kreis an denselben Controller (70a in Fig. 3) angeschlossen sein, so dass dieser die Messdaten über die eine oder die andere Leitung abzufragen vermag. Dies entspricht etwa einem Betrieb, wie er in der WO 2009/065236 beschrieben ist. Alternativ ist die Schaltung 30 über den Anschluss 18a mit einer weiteren (oder anderen) Sensor- und/oder Aktorschaltung verbunden, und der Controller adressiert nacheinander eine dieser Schaltungen an, um deren Messdaten zu erfahren, wie das je auch schon bisher gemacht wurde.

Die Anschlüsse 18a, 18b stellen hier einen Bus dar und führen beispielsweise ein positives Signal im Verhältnis zum Signal der negativen Leitung 17. Zwischen diesen Leitungen 17 und 18a, 18b wird also das jeweilige Signal abgefühlt. Dabei erfolgt die Adressierung über eine Umschalteinrichtung 1a, 1b, 2a, 2b und 25, welche bei geöffneten Schaltern 2a, 2b und geschlossenem Schalter 25 nur ein Signal vom Controller (z.B. 70a in Fig. 3) über die in dieser Richtung offene Diode 1b (die Diode 1a sperrt) und über den geschlossenen Schalter 25 zu einer Auswerteeinrichtung 14 führt. Diese Auswerteeinrichtung 14 gibt über Ausgänge 26 und/oder 29 ihrer Messung entsprechende Ausgangssignale ab, worauf - vorzugsweise auf Befehl des Controllers, gegebenenfalls aber beispielsweise über eine Zeitschaltung innerhalb der Auswerteeinrichtung 14 - die Schalter 2a, 2b geschlossen werden, der Schalter 25 aber geöffnet wird, so dass das nächste Abfragesignal des Controllers vom Anschluss 18b über die Schalter 2a, 2b zum Anschluss 18a und von dort zur nächsten anzuwählenden Knoteneinheit mit im Prinzip etwa gleicher Umschalteinrichtung 1a, 1b, 2, 2b und 25 gelangt, so dass, wie Fig. 3 zeigt, eine Unzahl solcher Module 30 (in Fig. 3 mit 80-1 bis 80-8 bezeichnet) hintereinander geschaltet und auf einfache Art und Weise adressiert werden können. Die Schalter 2a, 2b, 25 werden in der Praxis elektronische Schalter, wie Transistoren, insbesondere FET-Transistoren bzw. MOSFETs sein.

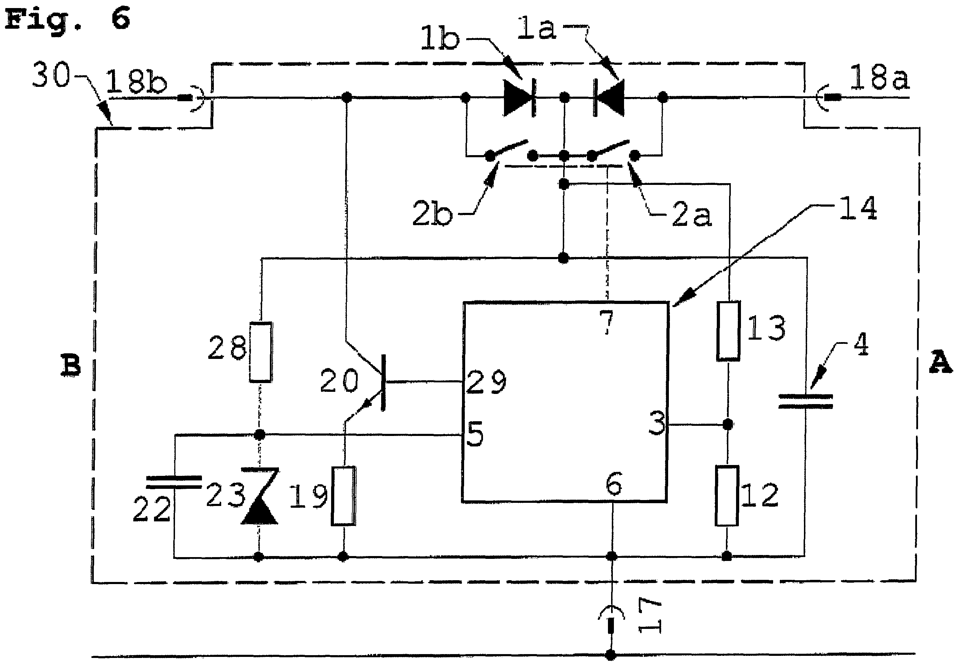

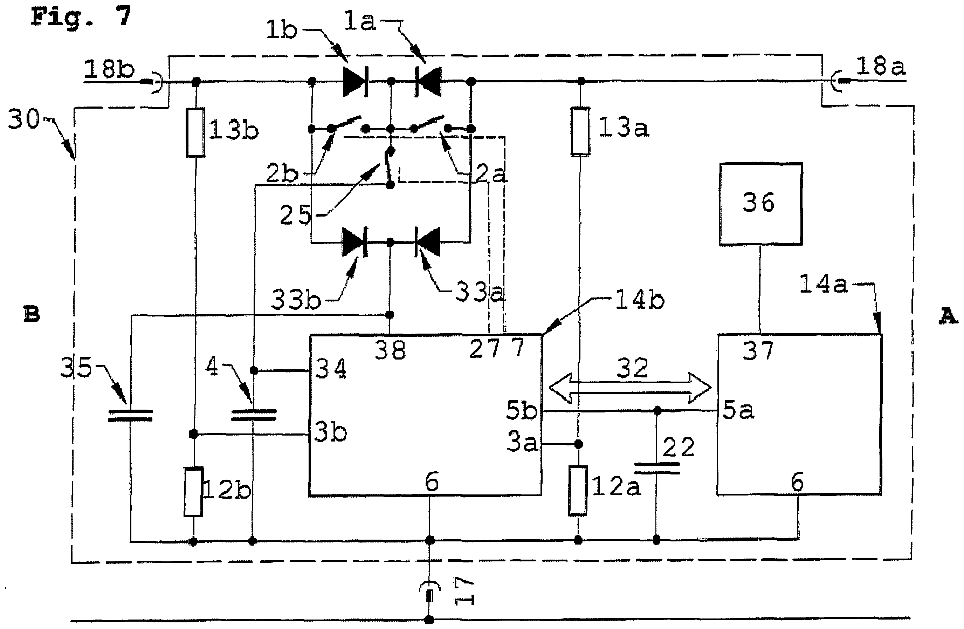

Als Schalter im Sinne der Erfindung sollen im weiteren allgemein elektrische Bauteile gelten, die in mindestens einer Richtung sperren, und durch Signale geöffnet werden können. Für eine genauere Beschreibung dieser Signale und Bauteile und ihrer Ansteuerung wird auf Fig. 6 und 7 verwiesen.

Die Knoteneinheiten 80-1 bis 80-8 können gleich und vorzugsweise wie die in Fig. 1 gezeigte Knoteneinheit 30 ausgebildet sein, oder sie sind jeweils unterschiedlich, etwa dass auf einen lichtelektrischen Anwesenheitssensor ein Infrarot-(Wärme-)Sensor folgt. Denn der Controller kann ja bei der Adressierung feststellen, welche Knoteneinheit er vor sich hat und wie daher das von ihr kommende Signal zu beurteilen bzw. zu verarbeiten ist.

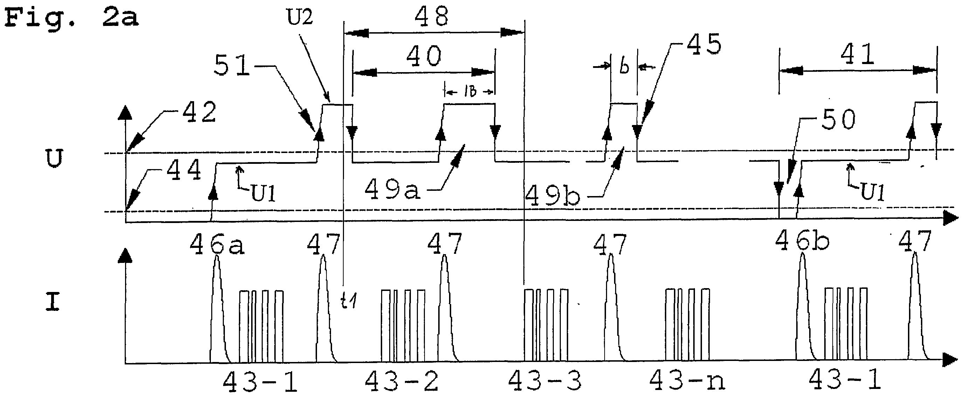

Das Umschalten der Schalter 2a, 2b und 25 könnte an sich zeitgesteuert ab Erhalt eines Adressierbefehls vom Controller durch einen Taktgeber der Schaltung 14 bzw. ein in der Schaltung 14 enthaltenes Programm erfolgen, doch ist es bevorzugt, wenn die Umschaltung über den Controller und ein von diesem abgegebenes Signal erfolgt, wie dies später an Hand der Fig. 2a besprochen wird. Tritt ein solches Umschaltsignal auf, dann werden die Schalter 2a, 2b über Steuerausgänge 7a, 7b und der Schalter 25 über einen Steuerausgang 27 entsprechend angesteuert. Zum Abfühlen, ob ein solches Umschaltsignal vom jeweiligen Controller vorliegt, sind Spannungsteiler 12a, 13a bzw. 12b, 13b vorgesehen, welche die zwischen den Leitungen 17 und 18 bestehende Spannung abfühlen. Diese Spannungsteiler liegen also ständig an den durch die Dioden 1a, 1b voneinander getrennten Leitungen 18a, 18b, so dass sie Spannungsbefehlssignale auch dann erhalten, wenn die Schalter 2a, 2b geschlossen und der Schalter 25 geöffnet wird, um die Adressierung der jeweils nächsten Knoteneinheit zu ermöglichen. Durch das Vorhandensein zweier Spannungsfühler 12a, 13a und 12b, 13b können also die Spannungen in den Leitungen 18a und 18b an beiden Seiten A und B unabhängig voneinander abgefühlt werden, und je nach dem, aus welcher Richtung ein Adressiersignal kommt, wie es später an Hand der Fig. 2a noch besprochen wird, wird auch das von der Auswerteschaltung 14 aufbereitete Sensorsignal gesandt, sofern tatsächlich zwei Richtungen vorgesehen werden, beispielsweise um an unterschiedliche Controller 70a, 70b (Fig. 3) zu gelangen, worauf die vorliegende Erfindung aber nicht beschränkt ist, die auch mit der Signalübermittlung nur in einer Richtung arbeiten könnte. In diesem Falle vereinfacht sich natürlich die Umschalteinrichtung 1a, 1b, 2a, 2b und 25. Die Auswerteschaltung vermag also durchaus zu erkennen, wo (Seite A oder B) ein Adressier- bzw. Steuersignal ansteht und wo nicht und kann dementsprechend die aufbereiteten Sensorsignale in die entsprechende Richtung senden. Eine günstige Lösung, welche ohne zusätzlichen Umschalter auskommt, wird später an Hand des Modulatortransistors 20 besprochen.

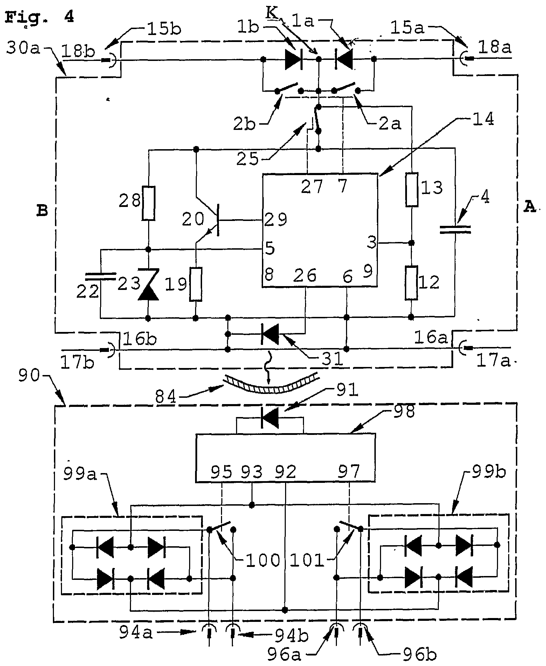

Wird der Ausgang 26 benutzt, so treibt dieser eine Diodenschaltung 24 (nur eine Diode ist dargestellt), so dass diese beispielsweise als Aktor einen Vorgang auslöst, wie dies an Hand der Fig. 4 im einzelnen noch beschrieben wird. Möglich wäre aber auch, hier einen Treiberausgang für ein Display vorzusehen, um die Messung nach aussen sichtbar zu machen. Das zugehörige Messsignal von einem (nicht dargestellten) Sensorelement tritt über eine Eingangsleitung 10 an den Eingang 8 der Auswerteschaltung 14, wogegen ein weiterer Signalausgang 9 mit einer Ausgangsleitung 11 verbunden ist. Diese Leitungen 10, 11 können die positive und negative, mit dem Sensorelement 10a jeweils verbundene Leitung darstellen. Die Leuchtdiode 24 kann beispielsweise im Infrarot-Bereich emittieren. Es ist günstig, wenn die Ummantelung der Leitungen 17, 18 durchsichtig bzw. lichtdurchlässig ist, so dass bei Auftreten eines Fehlers und nach dem Einschalten der Diode 24 der Ort bei einer Begehung durch Aufsichtspersonen auch optisch leicht feststellbar ist. Dabei ist die Auffälligkeit besonders gross, wenn die Auswerteschaltung 14 die Diode 24 intermittierend ansteuert damit sie ein Blinksignal abgibt (Funktion eines astabilen Multivibrators innerhalb der Schaltung 14).

Selbstverständlich sind auch andere Lichtquellen oder Aktorenschaltungen, beispielsweise mit Relais, denkbar, doch ist die Verwendung einer Diode baulich günstiger. Die Diode kann nämlich auch modulierte Signale ausgeben, ja sie könnte auch durch entsprechende Schaltung der Auswerteeinheit 14 zur Abgabe der Sensordaten über einen lichtelektrischen Wandler oder über einen ihre Lichtsignale empfangenden optischen Leiter, wie Lichtleitfasern, herangezogen werden. Dabei kann die Diode etwa einen impulsfrequenz- und/oder impulsbreitemodulierten Lichtstrahl abgeben, und zwar entweder indem die Diode an der Oberfläche der Schaltung 30 oder in einem lichtdurchlässigen Gehäuse sitzt oder indem sie von innen her über einen Lichtleiter mit der Aussenseite verbunden ist. Der Lichtstrahl der Diode 24 liegt vorzugsweise im Infrarotbereich.

Der an die Leitung 10 angeschlossene Sensor kann an sich beliebiger Art sein, etwa ein Temperatursensor bekannten Typs, wenn die Temperatur überwacht werden soll, oder ein Metallsensor (kapazitiv, induktiv od.dgl.), um die Belegung eines Parkhauses mit Autos festzustellen, ein Feuchtigkeitssensor, um Leckagen zu ermitteln usw. Statt eines ausserhalb liegenden Sensors, der seine Signale über die Leitungen 10, 11 an die Auswerteschaltung bringt, kann der Sensor auch in die Schaltung 14 eingebaut sein.

Eine besondere Ausgestaltung eines Sensorelementes kann in der Form eines Sensors für Verzerrungen des Erdmagnetfeldes ausgeführt sein, um etwa unerwünschte Verformungen einer Pipeline festzustellen. Dabei werden die Knoteneinheiten neben einem ferromagnetischen Objekt, also beispielsweise einer Pipeline, dort angebracht, wo Relativbewegungen zwischen dem Messwertgeber und dem ferromagnetischen Objekt auch Änderungen des Erdmagnetfeldes am Ort der Knoteneinheit hervorrufen. Messwertgeber und ferromagnetisches Objekt sind dabei unabhängig voneinander mechanisch befestigt.

Solche Sensoren können aber auch für andere Rohre, wie Wasser- oder Gasrohre, Abwassemetze, und auch für die Bewirtschaftung von Parkraum in Parkhäusern angewandt werden.

Es ist zu erwähnen, dass die Signalleitungen 10, 11 - soferne vorgesehen und der hier nicht dargestellte Sensor nicht in die Schaltung 14 eingebaut ist - von dem Potential an den Leitungen selbstverständlich isoliert ist. Dies kann so geschehen, dass die Signalleitungen als optische Leiter ausgebildet sind, deren übertragenes Licht von einer vom Sensorsignal gesteuerten LED (ähnlich der LED 24) erzeugt wird und an deren Ausgang dieses Licht auf analoge Weise, nämlich über einen lichtelektrischen Wandler, als Spannung dem positiven und negativen Eingang 8 bzw. 9 zugeführt wird.

Ein Modulatoranschluss 29 dient dazu, ein dem über die Leitung 10 hereinkommenden Messwert entsprechend moduliertes Signal (43-1 bis 43-n in Fig. 2a) über einen Modulatortransistor 20 an den Bus (Anschluss 18b) und an den Controller abzugeben, der dieses Signal auf die herkömmliche Art auswertet, beispielsweise um festzustellen, ob im Bereiche eines vorbestimmten Sensormoduls 30 eine unzulässige Erhitzung aufgetreten ist (bei Metalldetektoren, ob im Bereiche des entsprechenden Moduls etwa ein Autoblech vorhanden ist). Denn so lange als die Knoteneinheit 30 ein erstes Signal, beispielsweise eine unter einem bestimmten Wert liegende Spannung, erhält, überträgt die Auswerteschaltung 14 Daten des an die Leitung 10 angeschlossenen Sensors, die sie über den Eingang 8 empfangen hat. Diese Übertragung erfolgt, indem ein gewisses Mass an Leistung über einen Absorberwiderstand 19 absorbiert und über einen Modulatorkreis, hier eben in Form des Transistors 20, moduliert wird.

Im vorliegenden Beispiel ist also der Modulatorkreis als Transistor mit zwei Kollektoren dargestellt. Diese Ausführung erlaubt es, die modulierten Ausgangssignale nötigenfalls in beide Richtungen A und B zu senden, wenn - wie in Fig. 3 - beide Seiten an einen oder je einen Controller 70a, 70b angeschlossen sind. Eine solche Ausführung entspricht etwa der Lehre der schon genannten WO 2009/065236, auf die hier ausdrücklich Bezug genommen wird. Es wäre aber auch möglich, nur einen Kollektor des Transistors 20 vorzusehen, der etwa an den gemeinsamen Kontakt der Dioden 1a, 1b gelegt ist.

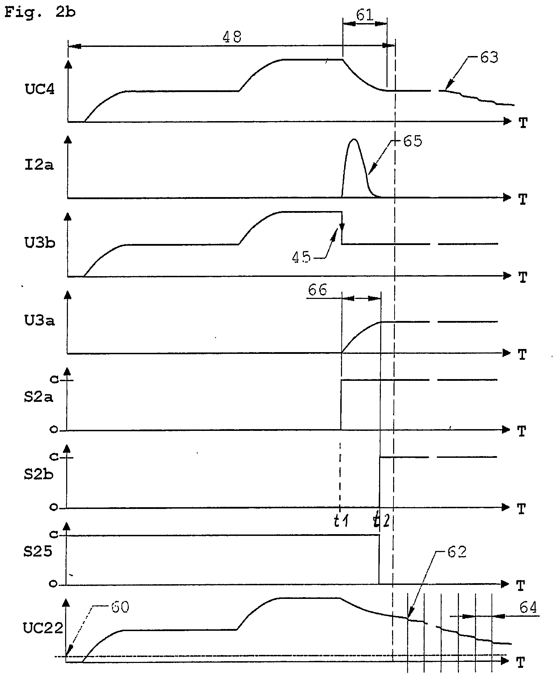

Wenn nun die normalerweise offenen Schalter 2a, 2b geschlossen und der, normalerweise geschlossene, Schalter 25 geöffnet ist, dann ist die Messschaltung 10, 11, 14 praktisch auch von der Spannung abgekoppelt, die sie für ihr weiteres Funktionieren braucht. Um dieses Problem zu lösen, ist in der Schaltung 30 mindestens eine Stromquelle bzw. ein Stromspeicher, hier in Form zweier Kondensatoren 4 und 22 vorgesehen. Alternativ könnten Akkumulatoren verwendet werden, die sich (ebenso wie hier die Kondensatoren 4, 22). Dabei ist es vorteilhaft, wenn die Umschaltung der Schalter 2a, 2b und 25 nicht genau gleichzeitig erfolgt, sondern zunächst entweder die beiden Schalter 2a, 2b aus dem geöffneten in den geschlossenen Zustand bei weiterhin geschlossenem Schalter 25 gebracht werden oder wenigstens erst der Schalter 2a geschlossen wird, wie später an Hand der Fig. 2b noch erläutert wird. Dadurch wird Ladung aus dem Kondensator 4 an die Leitung 18a und an die nächste Knoteneinheit (bezogen auf Fig. 3 etwa von Knoteneinheit 80-1 zur Knoteneinheit 80-2) abgegeben, und die Adressierung desselben kann sehr schnell erfolgen. Der Kondensator 22 bleibt von diesem "verspäteten" Öffnen des Schalters 25 deshalb unberührt, weil zwischen ihm und dem Schalter 25 eine Sperrdiode 21 liegt. Die Grösse des zeitlichen Unterschieds zwischen dem Schliessen der Schalter 2a, 2b und dem Öffnen des Schalters 25 hängt davon ab, wie gross der Kondensator 4 ist, d.h. welche Ladung in welcher Zeit übertragen werden kann, und von dem Bedarf an Ladung der als nächstes anzuwählenden Knoteneinheit. Der Kondensator 22 in Zusammenarbeit mit der Diode 21 kann daher als "Ladungspumpe" bezeichnet werden.

Somit kann nach dem Öffnen des Schalters 25 der Reststrom aus dem Kondensator 4 mit der Ladung des maximal aufgeladenen Kondensators 22 kombiniert werden. Beide Kondensatoren 4 und 22 sind nach dem Öffnen des Schalters 25 von den Leitungen 18a, 18b praktisch isoliert und beeinträchtigen daher die Datenübertragungsrate zwischen dem Controller (70a, 70b in Fig3) und den jeweiligen Knoteneinheiten nicht.

Um die Stromquellen 4, 22 nicht zu gross machen zu müssen, ist es zweckmässig, wenn die Schaltung auf einen "sleep"-Modus, d.h. auf eine Betriebsart mit geringerem Stromverbrauch, geschaltet werden kann. Dies kann über ein in der Schaltung 14 vorhandenes Programm oder über einen darin befindlichen Taktgeber (z.B. mit Zahler, der eine gewisse Anzahl von Takten nach dem Öffnen des Schalters 25 auf diesen "sleep"-Modus umschaltet) geschehen, wird aber bevorzugt über ein "sleep"-Signal des Controllers ausgelöst. Dieses Signal kann und wird ja auch nach dem Öffnen des Schalters 25 über die Spannungsteiler 12a, 13a bzw. 12b, 13b empfangen werden. In diesem "sleep"-Modus wird die Schaltung 14 über eine Zenerdiode 23 mit Widerstand 28 zwischen den beiden Seiten des Kondensators 22 mit dem relativ tieferen Strom versorgt, wobei sich der Kondensator 22 so weit entlädt, bis er die Restspannung des Kondensators 4 erreicht hat, worauf ihm von diesem diese Restspannung als weitere Versorgungsreserve über die Sperrdiode 21 zugeführt wird. Somit steht der Auswerteschaltung bis zum nächsten Adressierzyklus genügend Energie zur Verfügung. Es sei bemerkt, dass die kapazitiven Ladungen der Kondensatoren 4 und 22 bei geöffnetem Schalter 25 von den Leitungen 18a, 18b völlig isoliert sind und daher die Signalübermittlung nicht zu beeinflussen vermögen.

Diese Auswerteschaltung kann also auch dann Daten des Sensorelementes sammeln, wenn sie nicht adressiert ist. Um diese Daten auszuwerten, besitzt die Schaltung 14 vorzugsweise einen Datenspeicher, in dem die Sensordaten gespeichert werden so dass die Modulatorschaltung 19, 20 erst wieder in Betrieb geht, wenn die Knoteneinheit 30 vom Controller (70a, 70b in Fig. 3) wieder angewählt wird. Dabei kann durchaus auch eine Vorbearbeitung der Daten stattfinden, etwa eine Mittelwertbildung über einen bestimmten Zeitraum (z.B. dem Zeitraum bis zur neuerlichen Adressierung), oder eine Maximal-/Minimalwert-Feststellung, so dass die Verarbeitung beim Controller rascher vor sich gehen kann.

Sieht man sich die Fig. 2a im Vergleich zur Schaltung nach Fig. 3 an, so ist in Fig. 2a im oberen Diagramm die Spannung U über die Zeit aufgetragen, wogegen im unteren Diagramm der Strom der von der Schaltung 30 abgegebenen Stromsignale über die Zeit gezeigt ist. Wenn nun etwa der Controller 70a (Fig. 3) zum Adressieren bzw. Anwählen der ersten Knoteneinheit 80-1 ein erstes Signal abgibt, so antwortet diese, indem sie die gemessenen Sensorsignale über die in Fig. 1 gezeigte Modulatorschaltung 19, 20 (alternativ oder zusätzlich über die Diode 24, die aber bevorzugt für die Ausgabe von Daten, wie oben beschrieben, gedacht ist) ausgibt. Das erste Signal ist gemäss Fig. 2a einfach eine Anhebung der vom Controller 70a abgegebenen Spannung U1, die oberhalb eines Reset-Niveaus 44 aber zweckmässig unterhalb eines höheren Niveaus 42 liegt. An sich kann dieses Adressiersignal aber ein beliebiges sein, etwa eine Abfolge von Impulsen vorbestimmter Frequenz (was weniger bevorzugt ist, weil diese Frequenz in der Schaltung 30 bestimmt werden müsste), oder es kann die Absenkung einer Spannung von einem höheren Niveau sein (was ebenfalls weniger bevorzugt ist) usw. Das Signal U1 wird in der Knoteneinheit 30 über den Spannungs- bzw. Signalfühler 12b, 13b abgefühlt und über den Eingang 3b an die Schaltung 14 abgegeben. Die Stromquellen 4, 22 werden im allgemeinen so bemessen sein, dass sie zu diesem Zeitpunkt praktisch ihre gesamte Ladung abgegeben haben.

Mit dem Anstieg der Spannung auf den Wert U1 (siehe schmaler Impuls 49b) ist die Abfrage nach den Sensordaten aus der ersten Knoteneinheit 80-1 (Fig. 3) eingeleitet, und sie beginnt in diesem Beispiel einmal mit einem Reset-Signal 46a für die Aufladung der Kondensatoren 4, 22 (Fig. 1), das sich aus der Anhebung der Spannung auf das Niveau U1 ergibt. Anschliessend wird ein Datenpaket 43-1 an den Controller 70a über die Leitungen 17 und 18b (Fig. 1) übermittelt, welches die oben besprochenen Daten aus der Auswerteeinheit 14 über die Modulatorschaltung 19, 20 umfasst.

Ist das Datenpaket 43-1 - allenfalls mit einem "Ende der Übertragung"-Signal am Schluss - durchgegeben worden, dann sendet der Controller 70a, allenfalls nach einem Sicherheits-Zeitabstand, ein zweites Signal, das an sich ebenfalls beliebig wählbar ist, vorzugsweise jedoch aus einem über eine Anstiegsflanke 51 erreichten höheren Spannungsimpuls U1 mit vorbestimmter erster Impulsbreite b besteht. Der Anstiegswinkel dieser Flanke 51 hängt von der vom Controller 70a abgegebenen Ladung und der Impedanz und Länge der Leitungen 17, 18a, 18b sowie von der Ausgangsimpedanz der vom Controller 70a benutzten Treiberschaltung ab.

Dieser neuerliche Spannungsanstieg führt zur Aufladung der Kondensatoren 4 und 22 auf ihre Maximalladung, was einen starken Stromimpuls 47 ergibt, der vom Controller 70a erhalten wird. Ab einem Zeitpunkt t1 erfolgt dann das Umschalten der Schalter 2a, 2b, 25 (das "verspätete" Öffnen des Schalters 25 kann über die Schaltung 14 und deren Steuerausgang 27 bewirkt werden) bzw. die Ladungsübertragung aus dem Kondensator 4 an die nächste Knoteneinheit 80-2, wie dies oben beschrieben wurde. Nun geschieht innerhalb eines Zeitsegmentes 48 ein analoger Vorgang für die nächste Knoteneinheit 80-2 (Fig. 2), und zwar genauer gesagt ab der abfallenden Flanke des Signales U2, das nun unter das Niveau 42 fällt (vgl. die Flanke 45), in einem Zeitraum 40. Dieser Signalabfall 45 ist bei der Schaltung nach Fig. 1 klar durch die Dioden 1b und 22 definiert, da die Diode 22 höhere Spannung in der Stromquelle 22 isoliert, und die Diode 1b dieselbe Aufgabe für die Stromquelle 4 übernimmt. Somit liefert der Signalabfall 45 - wie aus Fig. 2a ersichtlich - eine präzise Zeitreferenz für die Dauer 40 des Adressierzyklus. Dieser beinhaltet auch die Ladungsübertragung vom Kondensator 4 zur nächsten Knoteneinheit, die etwa durch Schliessen eines Schalters 2b (oder bei Abfrage aus der Richtung A des Schalters 2a) bei geschlossenem Schalter 25 ihren Kondensator 4 aufzuladen vermag. Erst dann wird der jeweils andere Schalter 2a (bzw. im Falle der Abfrage aus der Richtung A der Schalter 2b) geschlossen. Wie erwähnt, wird dann auch der Schalter 25 geöffnet.

Die Signale U1, U2, 49a, 49b sind besonders einfach und einfach zu verwirklichen, doch können im Prinzip alle gemäss dem Stande der Technik bekannten Steuersignale, z.B. besonders modulierte Signale, binäre Signale usw., verwendet werden. Es ist aber ersichtlich, dass dann entsprechende Decoder statt der einfachen Signalerkennungsschaltung 12, 13 erforderlich sein werden.

Wie aus dem unteren Diagramm erkennbar ist, wird von der Knoteneinheit 80-2 ein Datenpaket 43-2 an den Controller 70a gesandt, ab dessen Ende der Controller 70a ein drittes Signal 49a abgibt, weil der Controller 70a an Hand des Datenpaketes 43-2 die Notwendigkeit einer Aktion am Orte der Knoteneinheit 80-2 erkannt hat.

Dieses dritte Signal 49a besteht in einer neuerlichen Anhebung der Spannung auf den Wert U2 aber mit gegenüber dem Impuls mit der Flanke 51 deutlich veränderter, hier im Beispiel vergrösserter, Impulsbreite IB. Die Impulsbreite wird von der Knoteneinheit beispielsweise als ein Bit einer Information verstanden, welche die diesen Impuls 49a über den Spannungsteiler 12b, 13b (Fig. 1) abfühlende Auswerteschaltung 14 dazu veranlasst, die Diode 24 einzuschalten, welche dann eine der oben erwähnten Aktionen auslöst.

Wie sich weiter aus den Fig. 2a und 3 ergibt, wird die Adressierung an die jeweils nächste Knoteneinheit 80 mit Impulsen 49b ausgelöst. Ist die Adressierung am Ende einer Leitung bzw. eines Busses angekommen, sind alle Knoteneinheiten 30 durch das Öffnen ihrer Schalter 25 praktisch isoliert. Um zum Anfangszustand wieder zurückzukehren, lässt nun der Controller 70a die Spannung scharf unter das Niveau 44 bzw. bis auf Null abfallen, wie dies bei 50 gezeigt ist. Die zu diesem Zeitpunkt in allen Knoteneinheiten 30 (bzw. 80-1 bis 80-8 und 81 der Fig. 3) geöffneten Schalter 25 stellen sicher, dass der Abfall auf Null nicht dazu führen kann, dass sich die Stromquellen 4, 22 entleeren.

Damit wird wieder der In Fig. 1 gezeigte Zustand mit geöffneten Schaltern 2a, 2b und geschlossenen Schaltern 25 erreicht, weil eben die Schalter 2a, 2b als normalerweise geöffnete und der Schalter 25 als normalerweise geschlossener Schalter ausgebildet sind. Im Anschluss an den Abfall 50 ist zu sehen, dass dann wieder ein neuer Anstieg zur Abfrage der ersten Knoteneinheit 80-1 auf die Spannung U1 erfolgt, worauf sich der Zyklus wiederholt.

Es mag erwünscht sein, dass der Controller, der durch das sukzessive Adressieren weiss, wie viele Knoteneinheiten an das Kabel 17, 18 angeschlossen sind, diese mit einer gespeicherten Soll-Anzahl vergleicht. Auch kann der Controller - falls erwünscht - ein viertes, Konfigurationssignal senden, etwa um von den Knoteneinheiten Informationen über ihre Seriennummer und ihren Typ zu erhalten, wobei letzteres ja insbesondere von Interesse sein wird, wenn am Kabel 17, 18 mehrere verschiedene Sensor-Knoteneinheiten vorgesehen werden. Eine solche Information wird sich auch dann empfehlen, wenn die Konfiguration des Kabels geändert wird, also etwa neue Knoteneinheiten angefügt werden.

Durch Abgabe unterschiedlicher Signale kann also der Controller 70a verschiedene Reaktionen der Knoteneinheiten 30 auslösen, etwa auch sie veranlassen, den Auswerte-Algorithmus zu verändern, einzelne Knoteneinheiten 30 abschalten (z.B. durch permanentes Schliessen der Schalter 2a, 2b) oder aktivieren, ersteres insbesondere dann, wenn sich eine Knoteneinheit als fehlerhaft herausgestellt hat. Beispielsweise kann es zur Veränderung der Abfragekadenz von Interesse sein, zunächst einmal vielleicht nur jede zweite Knoteneinheit abzufragen, und erst dann alle Knoteneinheiten einzuschalten (d.h. die Schalter 2a, 2b bei geschlossenem Schalter 25 zu öffnen), wenn ein örtliches Gebiet näher unter die Lupe genommen werden soll, beispielsweise weil eine dort nahe befindliche Knoteneinheit ein verdächtiges Signal abgegeben hat. Anderseits kann es in einem Notfall, in welchem man den Ort eines Brandes od.dgl. erkannt hat, zweckmässig sein, die von diesem Ort entfernten Knoteneinheiten abzuschalten, um die Brandstelle häufiger und mit grösserer Abfragekadenz überwachen zu können. Bei Bestückung der Knoteneinheiten mit Anwesenheitssensoren zur Überwachung eines Gebäudes können die in Betrieb befindlichen Knoteneinheiten dann reduziert werden, wenn das Gebäude von seinen Bewohnern besetzt ist.

In der obigen Schilderung des Betriebes und der Abfrage der Knoteneinheiten wurden die Datenpakete 43 erwähnt. Es ist aber durchaus möglich, die Abfragezeit noch zu verkürzen, wenn die Auswerteschaltungen 14 selbst einen Vergleich der Durchschnittswerte eines längeren Zeitraums mit den aktuellen Signalen eines Sensorelemente (an Leitungen 10, 11) vornehmen und dem Controller nur dann ein besonderes Token senden, wenn eine deutliche Abweichung gegenüber dem Durchschnitt gegeben ist.

Ein weiteres mögliches Programm in der Schaltung 14 kann derart beschaffen sein, dass bei Absinken des Stromes der Stromquellen 4, 22 unter einen zulässigen Wert die Auswerteschaltung von sich aus den Schalter 25 schliesst, um die Kapazitäten wieder aufzufüllen und so ihren "sleep"-Modus aufrecht halten zu können.

Die Fig. 2b zeigt die an verschiedenen Komponenten der (bevorzugten) Schaltung der Fig. 1 auftretenden Spannungen und logischen Zustände. Die treibende Spannung ist dabei jeweils die in Fig. 2a dargestellte, so dass der Zeitabschnitt 48 der Fig. 2a auch in Fig. 2b eingezeichnet ist. Beide Figuren, 2a und 2b, geben die Spannungsverläufe für die Knoteneinheit 80-2 wieder, von der ja oben gesagt wurde, sie erhalte wegen des von ihr abgegebenen, eine Unregelmässigkeit anzeigenden Signals einen Signalbefehl 49a zur Auslösung einer Aktion erhalten.

So zeigt die Fig. 2b als oberstes Diagramm den Spannungsverlauf UC4 über die Zeit T am Kondensator C4 während eines Adressierzyklus. Sieht man die etwa rechteckigen Signale U1, 49a, 49b des Controllers 70a, dann spiegeln diese sich im Verlauf des Diagrammes UC4 zwar wieder, aber infolge der Aufladung des Kondensators 4 (und des Kondensators 22) mit etwas verzögertem Anstieg. Das gilt auch für das Diagramm U3b für die am Eingang 3b der Schaltung 14 hereinkommende Spannung mit der Aufladzeit 66. Anderseits widerspiegelt sich der Spannungsabfall 45 (Fig. 2a) deswegen ebenso scharf im Diagramm U3b, weil die Diode 21 eine Entladung des Kondensators 22 verhindert. Dieser scharfe Spannungsabfall 45 wird vom Spannungsfühler 12b, 13b (oder bei Signalabgabe vom Controller 70b aus der Richtung A vom Spannungsfühler12a, 13a) an die Eingänge 3a oder 3b der Auswerteschaltung 14 weitergegeben, welche dann die entsprechende Umschaltung der Schalter 2a, 2b und 25 durchführt.

Wie oben bereits an Hand der Fig. 1 beschrieben wurde, erfolgt das Schalten der Schalter 2a, 2b und 25 nicht gleichzeitig. Dies sieht man an Hand der Diagramme S2a, S2b und S25 (an den Ordinaten der Diagramme S2a, S2b und S25 bedeutet "c" den geschlossenen Zustand, "o" den offenen Zustand), wobei hier das Schalten der Schalter 2b und 25 etwa gleichzeitig erfolgt. Die Wahl des Zeitpunktes kann aber je nach Dimensionierung der Spannungsquellen 4, 22 und der Bedürfnisse der Schaltung 14 unterschiedlich sein. Im in Fig. 2b dargestellten Fall öffnet der Schalter 25 (Diagramm S25) gleichzeitig mit dem Schliessen des Schalters 2b (Diagramm S2b) zu einem Zeitpunkt t2.

Wenn der Spannungsfühler in Form des Spannungsteilers 12b, 13b das Ansteigen der ihm vom Controller 70a zugeführten Spannung und den anschliessenden Spannungsabfall 45 (vgl. Fig. 2a) feststellt, wird der Schalter 2a geschlossen. Mit dem Schliessen des Schalters 2a ergibt sich im Diagramm I2a ein Ladungsstrom 65, der über die Schalter 2a und 25 den Kondensator 4 zum Aufladen desselben und über die Diode 21 allenfalls auch den Kondensator 22 erreicht. Kommt jedoch der Spannungsabfall 45 von der anderen Seite, d.i. vom Controller 70 b, wird die Abfolge des Öffnens und Schliessens, insbesondere der Schalter 2a, 2b umgekehrt sein.

Die Abfolge kann jedoch auch so - wie oben bereits erwähnt - gewählt werden, indem beide Schalter 2a, 2b zum Zeitpunkt t1 geschlossen werden und der Schalter 25 noch bis zum Zeitpunkt t2 geschlossen bleibt. In diesem Falle ergibt sich eine Übertragung eines Teils der Ladung des Kondensators 4 auf den entsprechenden Kondensator der nächsten Knoteneinheit (z.B. 80-2) sofern dort die Steuerung der Schalter in der aus Fig. 2b ersichtlichen Weise erfolgt.

Die Spannungssignale an den Eingängen 3a, 3b sind an sich gleich aber zeitverschoben. Zum Zeitpunkt des Spannungsabfalles 45 (Diagramm U3b) liegt die Spannung am Eingang 3a bei oder nahe bei Null. Nach Empfang des Adressier-Signals 45 wird zweckmässig der Schalter 2a zuerst öffnen. Sobald dies geschehen ist, fällt die Spannung des Kondensators mit einer für ihn charakteristischen Zeitkonstante (Zeitraum 61) ab, wodurch in der geschilderten Weise die jeweils nächste Knoteneinheit (z.B. 80-2) mit dem Stromimpuls 65 (Diagramm I2a) aufgeladen werden kann. Damit aber steigt auch die Spannung während eines Zeitraumes 66, d.i. der Zeitraum zwischen den Zeitpunkten t1 und t2, am Eingang 3a (Diagramm U3a). Die genauen Signalformen des Ladungsübertragungsimpulses 65 und des Spannungsabfalles im Zeitraum 61 (Diagramm UC4) hängen von mehreren Faktoren, wie dem Widerstand der (elektronischen) Schalter im geschlossenen Zustand, der Eigenschaften der für die Knoteneinheit 30 gewählten Komponenten und dem Widerstand der Leitungen 17, 18a, 18b ab. Dies wiederum beeinflusst die für die Ladungsübertragung erforderliche Zeit 66, vorausgesetzt, es wird mit ungleichzeitigem Betätigen der Schalter 2a, 2b und 25 gearbeitet, wie es bevorzugt ist.

Die Wahl der Umschaltungsart für die Schalter 2a, 2b und 25 hängt auch davon ab, ob eine präzise Zeitabstimmung oder eine maximale Adressiergeschwindigkeit gewünscht ist. So können die Schalter 2a, 2b geschlossen und der Schalter 25 geöffnet werden, wenn die Spannung an der Stromquelle 4 auf demselben Niveau liegt wie die vom Controller (70a oder 70b in Fig. 3) abgegebene und an der Leitung 18a oder 18b liegende Spannung, um zu einer maximalen Adressiergeschwindigkeit zu kommen. Alternativ wird eine vorbestimmte Verzögerungszeit 66 dazu benützt, um nach dem Schliessen des Schalters 2a auch das Schliessen des Schalters 2b bzw. das Öffnen des Schalters 25 (zur Isolierung der Elektronikkomponenten der Knoteneinheit 30 von einer Ladungszufuhr, weshalb ja dann die Stromquellen 4 und 22 in Funktion treten) herbeizuführen, wie den Diagrammen S2a, S2b und S25 zu entnehmen ist, wodurch eine präzisere Zeitabstimmung der Funktionen erreicht wird.

Vergleicht man die Diagramme UC4 und UC22, so sieht man eine gewisse Ähnlichkeit, und die Unterschiede ergeben sich daraus, dass der Spannungsabfall, insbesondere in und um den Zeitraum 61 einer unterschiedlichen Zeitkonstante folgt, der daraus resultiert, dass die Entladung der beiden Kondensatoren 4 und 22 durch den Energieabfluss über den Kreis 28, 23 und die Auswerteschaltung 14 erfolgt, die nach erfolgter Adressierung in einen energiesparenden "sleep"-Modus geschaltet ist. Dabei dient die Diode 21 zur Entkopplung.

An Hand des Diagrammes UC22 ist auch zu sehen, dass nach dem Öffnen des Schalters 25 die Auswerteschaltung zur Stromersparnis in einen "sleep"-Modus übergeht, aus dem sie zum Abfragen, Speichern und Verarbeiten von über die Leitungen 10 und 11 gelieferten Sensordaten nur in regelmässigen Intervallen 64 aktiviert wird. Jede Abfrage verbraucht natürlich mehr Energie, und deshalb ist die Kurve im Bereich 62 gewellt, d.h. sie zeigt bei jeder Abfrage ein deutliches Absinken, worauf - nach Rückkehr in den "sleep"-Modus - die Spannung nur langsam abnimmt. Diesem Kurvenverlauf, der ja in erster Linie vom Kondensator 4 gespeist werden muss, entspricht die gewellte Kurve 63. Diese Kurve 63 sinkt aber im Vergleich zur Kurve 62 (Diagramm UC22) etwas weniger weit ab, weil ja mit Abfall der Ladung des Kondensators 22 unter die Spannung am Spannungsspeicher 4 die Diode 21 öffnet und das Ladungsreservoir des Spannungsspeichers 4 dem Kondensator 22 zur Verfügung stellt. Dabei sei erwähnt, dass für die Auswerteschaltung 14 eine relativ niedrige Grenzspannung 60 besteht, bis zu welcher sie funktionsfähig bleibt.

Betrachtet man die bereits mehrfach angesprochene Fig. 3, so wird die Erfindung bevorzugt auf eine Kreisschaltung angewandt, wie sie in der schon genannten WO 2009/065236 vorgeschlagen worden ist. Dies ist zwar bevorzugt, aber keineswegs zwingend erforderlich. Falls nur ein Controller (Kopfrechner) 70a vorgesehen ist, so wird dieser beispielsweise nur die Knoteneinheiten 80-1 bis 80-3 (Gruppe 101), 81 und 80-6 bis 80-8 (Gruppe 103) an der Leitung 18 haben und diese nacheinander abfragen, worauf er z.B. von vorne wieder beginnt. Natürlich kann, besonders in einem solchen Falle das Schalterpaar 2a, 2b durch einen gemeinsamen, einzigen Schalter mit einer einzigen Steuerleitung 7 ersetzt werden, wobei gegebenenfalls zugunsten dieser vereinfachten Ausführung etwas verschlechterte Leistungsdaten in Kauf zu nehmen sind, die darin bestehen können, dass der Ladungstransfer aus den Stromspeichern 4 und 22 weniger effizient vor sich geht. Der Schalter 25 wird aber bevorzugt an den gemeinsamen Kathodenpunkt K (Fig. 4) der beiden Dioden 1a, 1b angeschlossen. Anderseits wird in der Praxis Schalter 2 und Diode 1 on Form eines MOSFET-Schalters ausgeführt, in dem sowohl die Funktion der Diode als auch des Schalters enthalten ist.

Bei einer solchen Schaltung vereinfacht sich natürlich die Umschalteinrichtung der Knoteneinheit 30; denn dann wäre beispielsweise nur der Schalter 2a (oder nur 2b) und der Schalter 25 erforderlich, und da im allgemeinen (wie oben ausgeführt) die Schaltung so betrieben werden kann, dass der Schalter 2a offen ist, wenn der Schalter 25 geschlossen ist, so könnte dieses Schalterpaar auch als einfacher Umschalter, etwa in der Art eines bistabilen Multivibrators, ausgeführt werden.

Der Vorteil einer Kreisschaltung, wie dargestellt, d.h. entweder mit zwei Controllern, 70a, 70b oder mit einem einzigen Controller, bei dem der Anschluss 71b der letzten Knoteneinheit 80-8 direkt mit einem zweiten (nicht dargestellten) Anschluss zu den Leitungen 71 und 72 verbunden und an den Controller 70a rückgeführt ist, besteht darin, dass bei Ausfall einer Knoteneinheit, z.B. der Einheit 80-3, die übrigen, nachfolgenden Knoteneinheiten 81 und 80-6, 80-7, 80-8 nicht von der Abfrage automatisch ausgeschlossen bzw. von der Verbindung mit dem Controller 70a abgeschnitten sind. Vielmehr kann jede Knoteneinheit, z.B. 30 in Fig. 1, dann statt von der B-Seite auch von der A-Seite her, also durch den Controller 70b abgefragt werden, so dass der Ausfall der Knoteneinheit 80-3 nur zum Datenverlust von demjenigen Ort führen würde, von dem die Knoteneinheit 80-3 ihre Sensorsignale bezieht. Bei einem solchen Falle der Adressierung von beiden Controllern 70a, 70b her ist es zweckmässig, wenn der Controller 70b dem Controller 70a seine Betriebsbereitschaft signalisiert, etwa durch ein besonderes Bereitschaftssignal über die Schnittstelle (oder Router bzw. Modem) 83 und den Anschluss 73a, wobei das Bereitschaftssignal gegebenenfalls ein relativ kurzer Impuls mit hoher Spannung ist, z.B. ähnlich dem Impuls U2 (Fig. 2a), z.B. aber von kürzerer Dauer.

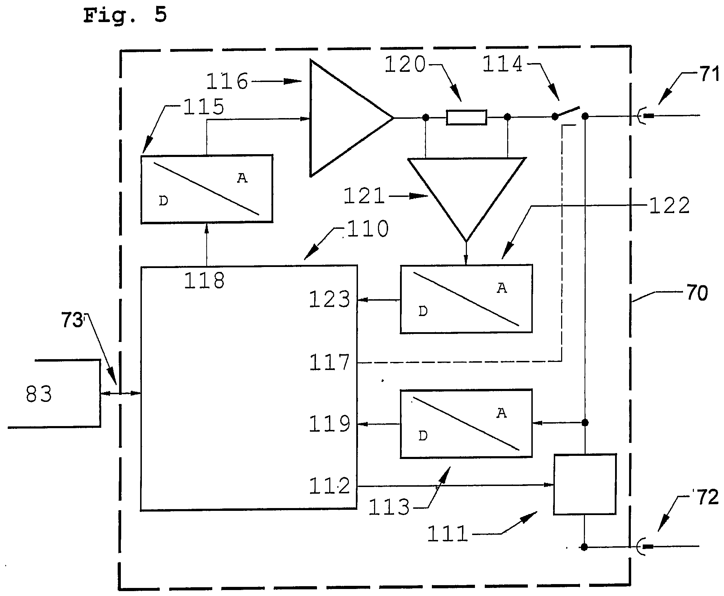

Natürlich kann die Kommunikation zwischen zwei, am selben Strang angeschlossenen Controllern auch über die Leitungen 71 und 72 erfolgen, wie später an Hand der Beschreibung der Fig. 5 erläutert wird.

Danach können die beiden Controller 70a, 70b miteinander in einen Dialog zum Austausch von Daten treten, wobei beispielsweise der Controller 70a die Führungsrolle (Zusammenführen, Auswerten, Abspeichern der ihm vom Controller 70b zugeführten Daten) übernimmt. Dieses Bereitschaftssignal von Seiten de Controllers 70b führt auch dazu, dass der Controller 70a keinen überflüssigen Stromabfluss über die Leitung 18 erleidet. Die bei einem solchen Dialog ausgetauschten Daten können das Abfrageintervall, die Definition der regelmässigen Abfrage, Fehler bei adressierten Knoteneinheiten 80-1 bis 80-8 und 81 oder ihr Ausfall sein. Dies ist besonders wichtig, wenn, nach einer bevorzugten Ausführungsform, die beiden Controller 70a, 70b abwechselnd arbeiten, wobei sie jeweils über den an den Daten 43-1 bis 43-n (Fig. 2a) anzuwendenden Algorithmus informiert werden.

Wenn ein solches abwechselndes Arbeiten stattfindet, ist es zweckmässig, wenn am jeweiligen Ausgang 75a, 75b ein Signal abgegeben wird, welches dem Ruhezustand entgegengesetzt ist, womit über die jeweilige Schnittstelle 78a bzw. 78b eine (nicht dargestellte) Anzeigeeinrichtung die Inbetriebnahme angezeigt werden kann und man sicher ist, dass keine Fehlfunktion aufgetreten ist. Die Anzeigeeinrichtung kann an sich beliebiger Art, also etwa auch akustisch, sein, doch ist eine optische Anzeige bevorzugt. Im Falle eines Displays könnte dieses dazu benutzt werden, anzuzeigen, an welcher Knoteneinheit ein teilweises oder totales Versagen aufgetreten ist.

Wenn beide Controller 70a, 70b arbeiten und einer von ihnen stellt, z.B. auf Grund eines Kurzschlusses zwischen den Leitungen 17, 18 in seinem Bereich oder durch einen Leitungsbruch, ein fehlerhaftes (oder gar kein) Verhalten einer Knoteneinheit als erstes fest, hört der betreffende Controller mit seiner Adressiertätigkeit auf, gibt ein "stromlos"-Signal über die Leitung 75 und lässt den jeweils anderen Controller weiter arbeiten. Bevorzugt ist es aber, wenn der den Fehler entdeckende Controller nach der für eine Adressierung aller Knoteneinheiten üblichen Zeit die Adressierung, wenigstens für die auf seiner Seite bis zur fehlerhaften Knoteneinheit verbliebenen intakten Knoteneinheiten neuerlich beginnt. Es ist also nur die fehlerhafte Einheit isoliert, wogegen alle anderen entweder vom Controller 70a oder vom Controller 70b abgefragt werden. Es wurde schon gesagt, dass diese Richtungsumkehr der Adressierung auch von einem einzigen Controller durchgeführt werden könnte, der mit beiden Enden des Kreises von Knoteneinheiten verbunden ist.

Im allgemeinen wird man die Controller 70a, 70b etwa gleich ausstatten, doch ist dies im Rahmen der Erfindung keineswegs erforderlich. Je nach der Anwendung können die Controller 70a, 70b baulich und/oder softwaremässig verschieden ausgebildet sein. Beide Controller 70a, 70b werden über eine Spannungsquelle 82 und Anschlüsse 77a, 77b mit Spannung versorgt. Allerdings kann auf diese Spannungszufuhr verzichtet werden, wenn die Energiezufuhr über den jeweiligen Informationsanschluss 73a bzw. 73b erfolgt, wie dies dann oft der Fall ist, wenn die Ethernet-Norm für den Informationsanschluss 73a bzw. 73b angewandt wird, was als POE (Power Over Ethernet) bekannt ist. Falls aber eine separate Spannungsquelle 82 verwendet wird, so müssen natürlich die Leitungen 17, 18 von ihr isoliert sein.

Eine weitere Besonderheit des dargestellten Kreises besteht in der Verwendung einer umschaltenden Knoteneinheit 81, welche - auf ein Signal des Controllers 70a, oder auf Grund eines in ihr vorgesehenen Programmes - die über die Leitung 18 kommenden Adressiersignale einmal einer Gruppe 102 mit Knoteneinheiten 80-4, 80-5 über den Anschluss 15c, und das andere Mal der aus den Knoteneinheiten 80-6 bis 80-8 gebildeten Gruppe 103 zuführt. Dies entspricht einem Betrieb, wie er aus der DE 199 02 490 bekannt geworden ist. In einem solchen Falle besitzt die Knoteneinheit 81 und ihre Umschalteinrichtung ausser den Schaltern 2a, 2b und 25 noch einen weiteren mit einer Diode zusammengeschalteten Schalter, der zum Anschluss 15c führen kann und der mit seiner Diode an den gemeinsamen Punkt zwischen die Kathoden der Dioden 1a, 1b (Fig. 1) geschaltet ist, wobei zur Betätigung dieses Schalters der Controller ein von den bereits besprochenen Signalen unterschiedliches Signal (z.B. einen besonders kurzen Impuls oder einen Impuls besonders hoher Spannung) aussendet, der von den Signalfühlern 12, 13 übernommen und an die Auswerteeinheit 14 abgegeben wird, die ihrerseits zusätzlich zu den Steuerausgängen 7a, 7b noch einen weiteren Steuerausgang für diesen Schalter besitzt. In jedem Falle aber ist die Anzahl der Knoteneinheiten 80, 81 an sich nicht beschränkt, und in jedem Fall ist es auch denkbar, dass die Auswerteschaltung 14 so programmiert ist, dass sie etwa nach Abfrage der Gruppe 101 und Adressierung der Knoteneinheit 81 zunächst die Gruppe 102 anwählt und nach dem Ende der Abfrage auf die Gruppe 103 umschaltet.

Die obigen Ausführungen zeigen, dass die jeweilige Knoteneinheit mit einem einzigen Schalter 2a, gegebenenfalls mit einem gesonderten Schalter 25 (oder als einziger Umschalter ausgebildet), mit zwei, drei oder aber auch noch mehr Schaltern der Umschalteinrichtung versehen sein können. Auf diese Weise könnte die Knoteneinheit 81 beispielsweise mittels eines zusätzlichen Schalters eine weitere an sie angeschlossene Gruppe von Knoteneinheiten, zusätzlich zur Gruppe 102, anwählen. Zu diesem Zwecke kann die Einheit 81 beispielsweise ein pulscodiertes Signal vom Controller 70 empfangen oder mittels eines langen Adressierimpulses (ähnlich dem Impuls 49a der Fig. 2a) die Gruppe 102, bei Ausgabe eines kurzen Adressierimpulses aber die Gruppe 103 anwählen.

Den Controllern 70a, 70b kann jeweils eine Schnittstelle 78a bzw. 78b zugeordnet sein, welches im vorliegenden Falle drei Eingänge 74a, 75a, 76a bzw. 74b, 75b und 76b aufweist, obwohl die Zahl der Eingänge je nach den Erfordernissen an sich beliebig sein kann. So kann über die Leitung 74 ein Signal dann an die Schnittstelle 78 (a oder b) vom Controller 70 abgegeben werden, wenn angezeigt werden soll, dass der Controller völlig ausgefallen und nicht mehr im Stande ist, die Knoteneinheiten 80-1 bis 80-8 abzufragen.

Über die Leitung 75 kommt die Benachrichtigung, wenn nur ein Teil des Systems ausgefallen ist, wobei gegebenenfalls das über die Leitung 75 kommende Signal derart moduliert ist, dass auch eine Aussage darüber getroffen werden kann, welcher Teil hier ausgefallen ist und/oder wie dem abgeholfen werden kann. Ein Beispiel für eine über die Leitung 75 kommende Meldung kann die Nicht-Adressierbarkeit einer Knoteneinheit 80-1 bis 80-8 oder 81 sein, was bedeutet, dass diese beschädigt oder sonst aus einem Grunde ausgefallen ist. Gerade in einem solchen Fall bewährt sich dann die gezeigte Kreisschaltung, weil dann die links und rechts von der ausgefallenen Knoteneinheit die noch funktionierenden Knoteneinheiten abgefragt werden können. Andere Gründe für ein Signal über die Leitung 75 kann ein Kurzschluss zwischen den Leitungen 17, 18 oder eine Unterbrechung einer dieser Leitungen sein.

Das Signal an der Leitung 76 dient zur Signalisierung von Ausnahmesituationen, wenn vom Controller eine bestimmte Situation, bei Anwesenheitssensoren zum Beispiel die Anwesenheit eines Einbrechers, festgestellt wird. Eine Beobachtungs- oder Wachperson kann über die Leitung 76 einer solchen Schnittstelle 78 dann alarmiert werden, während gleichzeitig der Controller beispielsweise über die Leitungen 17, 18 die Aktor-Diode 24 (Fig. 1) zur Auslösung einer Gegenmassnahme (z.B. Türen abschliessen oder verriegeln) in Betrieb setzt. Jedenfalls aber ist die Anzahl der Leitung und der so über die Schnittstelle 78 weitergegebenen Informationen nicht beschränkt. Die Anschlüsse 71 bis 76 sind, wie schon gesagt, zweckmässig potentialfrei.

Aber noch eine weitere Möglichkeit ist in Fig. 3 aufgezeigt: über einen Anschluss 73b kann eine Schnittstelle 83 für den Anschluss an das Internet www vorgesehen sein. Aber selbstverständlich bedarf es dann keiner besonderen Schnittstelle 83, wenn der Controller 70b selbst für einen Internetanschluss www ausgebildet ist. Wie ersichtlich, ist es für manche Anwendungen zweckmässig, wenn die Controller 70a, 70b, beispielsweise zu Synchronisierzwecken oder zum Austausch von Informationen miteinander verbunden sind. Dies kann beispielsweise über die Schnittstelle 83 und den Anschluss 73a geschehen. Dabei vermittelt die Schnittstelle 83 auch den Zugang des Controllers 70a zum Internet, nämlich über den Anschluss 73 a und die Schnittstelle 83 zum Internetanschluss www.

Nun ist gerade dann, wenn, wie aus den Fig. 1, 3 und 4 ersichtlich, die einzelnen Knoteneinheiten 30, 80-1 bis 80-8, 81, 30a über lösbare Anschlüsse 18a, 18b an die Leitung 18 und (siehe Fig. 3 und 4) über lösbare Anschlüsse 17a, 17b an die Leitung 17 angeschlossen sind, die Möglichkeit erleichtert, nach Bedarf einzelne Knoteneinheiten noch einzufügen oder herauszunehmen. Diesbezüglich wird auf die gleichzeitig eingereichte Patentanmeldung desselben Anmelders verwiesen. Natürlich liesse sich etwa ein Zusetzen einer Knoteneinheit auch ohne lösbare Anschlüsse 17a, 17b, 18a, 18b verwirklichen, indem die jeweilige Leitung 17 bzw. 18 einfach aufgetrennt wird, doch ist ein solches Vorgehen schon etwas heikel.

Wenn nun etwa eine Knoteneinheit - unter Einsetzen eines entsprechenden Kabelstückes 17, 18, das somit die Leitung 17 bzw. 18 verlängert - in den Kreis der Knoteneinheiten oder in die Gruppe 102 eingesetzt wird, dann werden die Controller 70a, 70b dies zunächst als "Fehler" wahrnehmen. Für einen solchen Fall wird das Adressierprogramm der Controller 70a, 70b zweckmässig so ausgestaltet, dass sie beim Adressieren der letzten Knoteneinheit, z.B. der Gruppe 101 oder 103, noch ein weiteres Adressiersignal abgeben, um zu versuchen, ob nicht noch eine weitere Knoteneinheit vorhanden ist (die vorher nicht da war). Erst wenn die Controller 70a, 70b erkannt haben, dass da eine Knoteneinheit neu ist, wird die Zahl der zu adressierenden Knoteneinheiten im jeweiligen Controller revidiert und dem anderen Controller (falls vorhanden) über die von 73a zu 83 (oder umgekehrt) reichende Leitung mitgeteilt.

Adressieren zwei Controller 70a, 70b jeweils über ihre letzte Knoteneinheit hinaus, dann kann es zu einer "Kollision" kommen, d.h. Adressiersignale von beiden Controllern erreichen eine Knoteneinheit. Diese an sich unerwünschte Situation wird von der Knoteneinheit bzw. ihrer Schaltung 14 dem jeweiligen Controller rückgemeldet, der sie als Bestätigung dafür wertet, dass die Anzahl der zu adressierenden Knoteneinheiten noch stimmt.

Die Detektion einer allfälligen Kollision erfolgt dabei in jener Knoteneinheit, die während der Kollision gerade adressiert ist. Dazu ist es nur erforderlich, dass diese an beiden Spannungsfühlern 12a, 13a und 12b, 13b (Fig. 1), und nicht nur an einem der beiden Spannungsfühler, eine Spannung misst. Dies zeigt an dass von beiden Seiten ein Controller (70a, 70b) gerade versucht, zu adressieren. Die detektierende Knoteneinheit kann dann diese Situation an den (oder die) Controller durch eine speziell codierte Rückantwort via Modulator 20 melden.

Bezug nehmend auf die Fig. 3 und 4, so ist in beiden Figuren eine Empfangsschaltung 90 für das von der Aktor-Diode 24 (Fig. 1) dargestellt. Über das Ausgangssignal an Klemmen 94, 96 der Empfangsschaltung können die oben bereits beispielshalber aufgezählten Aktoren (Löschventile, Schutzbarrieren, Einbrecher-Alarmsignale usw.) aktiviert werden. Im Falle der Fig. 3 und 4 ist die lichtemittierende Diode (LED) der Knoteneinheit 80-6 bzw. 30a, statt mit 24, mit 31 bezeichnet. Dieser Diode 31 ist von einem lichtdurchlässigen Kabelmantel 84 umgeben, so dass ihr Licht problemlos aus dem Kabel mit den Leitungen 17, 18 austreten kann. Der lichtemittierenden Diode 31 liegt ein lichtelektrischer Wandler 91 gegenüber, der beispielsweise von einer PIN-Diode gebildet sein kann, alternativ von einem Phototransistor. Damit können etwa von der Diode 31 abgegebene modulierte oder impulsbreitenveränderte (z.B. entsprechend den Signalen 49a, 49b der Fig. 2a) Signale von der Empfangsschaltung 90 über den Wandler 91 aufgenommen und ein entsprechendes Aktivierungssignal über die Klemmen 94, 96 an das zu aktivierende Element, wie oben in Klammer beispielshalber aufgezählt, abgegeben werden.

Die lichtemittierende Diode 31 kann dabei durchaus durch den lichtdurchlässigen Mantel eines verbindenden Kabels 84 hindurch Signale abgeben, oder sie kann über einen sie mit der Aussenseite verbindenden Lichtleiter mit dem empfangenden Teil 91 verbunden sein.

Im Falle der Fig. 4 ist ein Beispiel für eine solche Empfangsschaltung näher dargestellt. Dabei ist der Wandler 91 an einen Diskriminator-Stromkreis 98 angeschlossen, der zum Erkennen des von der Diode 31 abgegebenen Signals ausgebildet ist, sofern dieses Signal nicht ein "digitales" ist, d.h. die Diode 31 ist eingeschaltet oder nicht eingeschaltet. Beispielsweise sendet die Diode 31 alternativ ein kurzes, etwa dem Signal 49b der Fig. 2a entsprechendes, Signal oder ein langes, welches beispielsweise dem Signal 49a entspricht, um das Funktionieren der Knoteneinheit oder das Auftreten eines Fehlers anzuzeigen. Bei normaler periodischer Adressierung der Knoteneinheit 30a, wird also der Diskriminator 90 in periodischen Abständen ein Signal der Diode 31 erhalten und dies als gut funktionierenden Betrieb der Knoteneinheit 30a erkennen. Wenn das längere Signal 49a eine Störung entweder innerhalb der Knoteneinheit 30a oder ein aussergewöhnliches Sensorsignal anzeigen soll, dann wird der Stromkreis 98 zweckmässig als Impulsbreiten-Diskriminator ausgebildet sein, der also den breiteren die jeweilige Störung oder das ungewöhnliche Ereignis anzeigenden Impuls erkennt, und ein entsprechendes Signal an den Ausgang 94 bzw. 96 liefert. Fallen die Impulse der Diode gänzlich aus, dann wird der Diskriminator 98 etwa den Schalter 100 schliessen (Fehlerstellung), in der die Kontakte 94a, 94b vorzugsweise in den energielosen Zustand geschaltet sind.

Der Diskriminator 98 kann so ausgebildet sein, dass er während einiger Zykluszeiten die Anzahl der Adressierungen bzw. ihren Intervall, z.B. über einen Taktgeber und einen nachgeschalteten Zähler, misst und dann in einem Speicher hält. Diese Kadenz kann nach aussen, z.B. über ein Display, angezeigt werden. Erst nach dem Speichern wird der Schalter 100 geöffnet. Gleichzeitig wird das Ergebnis der Diskriminierung durch den Schaltkreis 98 über die Ausgangsanschlüsse 96a, 96b einer externen Einrichtung, z.B. einem Display, einer Leuchtanzeige oder anderen einem Aktor mitgeteilt. Im Falle des erwähnten Impulsbreiten-Diskriminators 98 wird der Schalter 101 je nach der empfangenen und festgestellten Impulsbreite geöffnet oder geschlossen, was ein einfaches digitales Signal am Ausgang 96 ergibt. Wie die Schalter 2a, 2b und 25 (Fig. 1) werden die Schalter 100 und 101 in aller Regel elektronische Schalter sein. Falls mehrere Aktoren an die Empfangsschaltung 90 angeschlossen sind, wird ein digitales Signal nicht ausreichen, und man muss dann wohl zu einer komplizierteren Signalmodulation greifen.

Bei einer bevorzugten, weil baulich und betriebsmässig einfachen, Ausführungsform wird die Energiezufuhr für die Empfangsschaltung 90 von denjenigen Kontakten abgeleitet, an die die Schalter 100 und 101 angeschlossen sind, und an denen die beispielshalber gezeigten Diodenschaltungen 99a, 99b liegen, welche den positiven und negativen Eingang 92 und 93 der Diskriminatorschaltung 98 beliefern.

Es sei erwähnt, dass der Ausgang 96 der Empfangsschaltung statt an einen Aktor auch an einen Controller 70a und/oder 70b rückgeführt werden kann, der so kontrolliert, ob die betreffende und adressierte Knoteneinheit richtig arbeitet. Diese Möglichkeit ist bei Sicherheitssystemen von besonderer Bedeutung. Beispielsweise kann die Empfangsschaltung 90 ihr Ausgangssignal an die Leitung 10 (Fig. 1) rückführen, von wo aus das Signal über die Auswerteschaltung 14 direkt an die Leitungen 17, 18 und an den Controller 70 (a und/oder b) weitergegeben wird.

Es sei darauf hingewiesen, dass die Fig. 4 eine Variante 30a zur Schaltung der Knoteneinheit 30 (Fig. 1) zeigt. Dabei ist der Modulator-Transistor 20 mit seinem Kollektor über den normalerweise geschlossenen Schalter 25 und normalerweise geöffneten Schaltern 2a, 2b an die gemeinsame Kathode K der beiden Dioden 1a, 1b gelegt, was bevorzugt ist.

Der Ladungsspeicher 22 ist hier nicht durch die Diode 21 (Fig. 1) gegen negative Spannungen in der Leitung 18a, 18b entkoppelt, sondern durch einen Serienwiderstand 28, der eine ausreichende Versorgung der Auswerteschaltung 14 sichert, an der die Sensorleitungen 10, 11 bzw. die Eingänge 8, 9 der Einfachheit halber nicht dargestellt sind. In jedem Falle aber ist diese Art der Schaltung kostengünstiger.

Ein weiterer Unterschied zur Schaltung der Fig. 1 besteht darin, dass beide Leitungen 17 und 18 über lösbare Anschlüsse 17a, 17b, 18a, 18b mit der Knoteneinheit 30a verbunden sind. Vergleicht man dies mit der Fig. 3, so dort, dass unter Umständen ein einziger lösbarer Anschluss 17a genügt. Es wurde oben gesagt, dass es vorteilhaft ist, wenn etwaige Zugspannungen in Längsrichtung der Leitung 17 sich nicht auf die Positionierung der Knoteneinheit auswirken, und deshalb sei es günstig, wenn eine der Leitungen 17, 18, und im Falle der Fig. 1 eben die Leitung 17 fest mit der Knoteneinheit verbunden ist. Allerdings erschwert sich dann das Einsetzen weiterer Knoteneinheiten in die Leitungen 17, 18, und ausserdem kann die Zugsicherung auch durch andere Mittel erreicht werden, wie dies in der gleichzeitig eingereichten Patentanmeldung desselben Anmelders dargelegt ist. Welche der beiden Lösungen verwendet wird, hängt vom Anwendungsfall ab. Die in Fig. 4 gezeigte Ausführung eignet sich besonders für den Austausch digitaler Signale oder auch für Systeme, bei denen nicht nur eine Verbindung zum Controller 70a bzw. 70b bestehen soll, sondern gegebenenfalls auch weitere Geräte an die Leitung und die Knoteneinheit(en) angeschlossen werden sollen.

In Fig. 5 ist eine bevorzugte Ausführungsform für einen bei der Erfindung zur Anwendung kommenden Controller 70 dargestellt, der einerseits an die Leitungen 71 und 72 und anderseits über den Anschluss 73 an die Schnittstelle 83 für das Internet (vgl. Fig. 3) angeschlossen ist. Dieser Anschluss 73 ist unmittelbar mit einen Prozessor 110 verbunden, so dass der Controller 70 in einen Datenaustausch mit dem Internetanschluss www (vgl. Fig. 3) treten kann. An einen Ausgang 112 des Prozessors 110 ist eine Modulatorschaltung 111 angeschlossen, die grundsätzlich gleich oder ähnlich wie die Modulatorschaltung 19, 20 der Fig. 1 ausgebildet sein kann und es dem Controller ermöglicht, auf dieselbe Art zu antworten, wie etwa eine Knoteneinheit 30. Auf diese Weise kann ein Datenaustausch zwischen den beiden an entgegengesetzten Enden des Kreises angeschlossenen Controllern 70a, 70b (Fig. 3) auch über die Leitungen 71, 72 stattfinden.

Über einen Steuerausgang 117 ist der Prozessor 110 mit einem Schalter 114 zu dessen Steuerung verbunden. Dieser Schalter 114 ist bevorzugt normalerweise geöffnet, wobei der Prozessor 110 bei geöffnetem Schalter 114 über eine Zeit verharrt, die jener entspricht, in der die Gruppen 102, 103, 104 und 81 (Fig. 3) komplett mit Adressierungen abgetastet worden sind. In diesem Fall ist es vorteilhaft, wenn der Controller 70 (z.B. 70a in Fig. 3) dem anderen Controller (z.B. 70b in Fig. 3) einen speziellen Code zusendet, indem er den Modulator 111 ansteuert.

Zwischen den Leitungen 71 und 72 liegt auch ein Analog/Digitalwandler 113, dessen Ausgang an einen Dateneingang 119 des Prozessors 110 angeschlossen ist. Stellt der Prozessor nun fest, dass am Dateneingang 119 - und dementsprechend zwischen den Leitungen 71 und 72 - eine Spannung anliegt, so schliesst er daraus, dass der jeweils andere Controller am gegenüberliegenden Ende der Anordnung diese komplett durchadressiert hat. Der empfangende Controller antwortet, indem er den Schalter 114 offen lässt und den Modulator 111 ansteuert und dem sendenden Controller so seine Bereitschaft signalisiert.

Der sendende Controller kann über ein speziell codiertes Signal entweder den Zyklus selbst von vorne beginnen oder dem empfangenden Controller auffordern, selbst die Anordnung der Knoteneinheiten zu adressieren. Im letzteren Fall wird der sendende Controller seinen Schalter 114 öffnen, und der empfangende Controller wird seinen Schalter 114 schliessen.

Je nach Einstellung kann der Prozessor 110 beispielsweise mit der Abtastung der Gruppen 102 bis 104 und 81 beginnen, indem er über den Steuerausgang 117 den Schalter 114 schliesst. Dadurch wird der Kreis der Knoteneinheiten 80-1 bis 80-8 und 81 (vgl. Fig. 3) mit Spannung versorgt (vgl. die Spannungssignale der Fig. 2a), die vom Prozessor 110 von einem Datenbus 118 an einen Digital/Analogwandler 115, und zweckmässig auch über einen Buffer 116, an die Leitung 71 abgegeben wird. Das heisst, dass der Prozessor 110 die an der Leitung 71 anliegende Spannung moduliert, indem er über den Datenbus 118 den Digital/Analog-Wandler 115 ansteuert und die zum Durchadressieren der Anordnung erforderliche Signalform erzeugt.

Dabei wird immer der von dem Kreis der Knoteneinheiten 80-1 bis 80-8 und 81 (Fig. 3) verbrauchte Strom gemessen, über den ja die Daten von den Knoteneinheiten zurück an den Controller 70 bzw. Prozessor 110 gesendet werden (vgl. das Stromdiagramm der Fig. 2a). Das Messen des Stromes erfolgt in diesem Beispiel über einen mit der Leitung 71 über den geschlossenen Schalter 114 verbundenen Widerstand 120 und einen Differenzverstärker 121, dessen Eingänge vor und nach dem Widerstand 120 liegen. Der Ausgang des Differenzverstärkers 121 geht über einen Analog/Digitalwandler 122 an einen Dateneingang 123 des Prozessors 110, der die Stromsignale (Fig. 2a) erhält und auswertet.

Im Rahmen der Erfindung sind zahlreiche Modifikationen möglich; so müssten die Signalfühler 12, 13 nicht unbedingt ständig an den Leitungen 17, 18a, 18b hängen, sondern könnten beispielsweise über einen Taktgeber der auswertenden Schaltung 14 zeitgesteuert, an diese Leitungen zugeschaltet oder weggeschaltet werden. Die Stromquelle wird zwar bevorzugt ein Stromspeicher (Akku oder Kondensator) sein, könnte aber für manche Anwendungsfälle auch etwa von einer photovoltaischen Zelle oder einem ähnlichen lichtelektrischen Wandler gebildet sein.

Fig. 6 zeigt eine, im Vergleich zur Ausführungsform gemäss Fig. 4 noch weiter vereinfachte Schaltung gemäss der vorliegenden Erfindung, die mit nur zwei Schaltern 2a, 2b auskommt. Dabei übernehmen die Dioden 1a und 1b die Isolation der Stromreserve in den Stromspeichern 4 und 23.

Diese Isolation kann natürlich nur wirksam werden, wenn die Dioden in Sperrrichtung geschaltet sind. Daher muss die Datenübertragung an den Kontroller in jenen Teil des Signals verlegt sein, in dem die Spannung der kombinierten Versorgungs- und Datenübertragungsleitung, die zwischen den Kontakten 17 und 18b bzw. 18a anliegt, kleiner ist als die Spannung am Speicherelement 4.

Dadurch wird die Modulation durch die Elemente 19 und 20 nicht beeinträchtigt. In der Fig. 6 ist auch eine weitere Vereinfachung dargestellt, die darin besteht, dass nur in Richtung einer Seite B Daten übertragen werden. Dies bringt eine Reduktion der nötigen Elemente mit sich, die mit dem Nachteil erkauft wird, dass die Anordnung nicht beidseitig 101, 103 (wie in Fig. 3), betrieben werden kann, sondern nur als Stichleitung 102 (vgl. Fig. 3).

Die Versorgung der Schaltung 14 wird in dieser Anordnung immer dann regeneriert, wenn die Spannung zwischen den Kontakten 17 und 18 grösser ist, als die am Speicherelement 4 anliegende.

Diese Ausführungsform hat zwar den Vorteil, mit einem Schalter weniger auszukommen, weist aber gegenüber jenen der Fig. 1 und Fig. 4 den Nachteil auf, dass es beim Hochfahren der Spannung zwischen den Kontakten 17 und 18 zu langen Ladezeiten kommt, wenn viele Bausteine 30 hintereinander angeschlossen sind. Dadurch kann es zu einer starken Verlangsamung derjenigen Kadenz kommen, mit der die Anordnung durchadressiert werden kann. Die mit dieser langsameren Kadenz einhergehende Verschlechterung der Leistungsdaten eines Systems mit vielen Bausteinen 30 gemäss der Erfindung ist daher um so grösser je mehr Strom durch den Baustein 14 verbraucht wird.

Es ist daher vorteilhaft, den Baustein 14 in zwei Teile aufzuspalten, die vorzugsweise in CMOS-Technologie ausgeführt sind. Da es sich bei einem Teil des Bausteins 14 um einen Mikrokontroller handelt, ist er vorzugsweise als synchrone Logik ausgeführt die über ein 'clock' Signal (Taktsignal) verfügt. Da CMOS Bauteile im wesentlichen nur beim Wechsel von einem logischen Zustand in den anderen Strom verbrauchen, enthält dieser Teil des Bausteins 14 jene Schaltungen, die viel Strom verbrauchen. Der andere Teil der Schaltung 14 enthält alle benötigten asynchronen Logik-Funktionen, die relativ selten den Zustand wechseln, und kann daher so ausgelegt werden, dass er nur extrem wenig Strom verbraucht.

In Fig. 7 ist ein Ausführungsbeispiel der Erfindung gemäss dieser Überlegung mit einer adressierbaren Einheit 30 dargestellt, deren Logik in Form eines synchronen Logikbausteins 14a und eines asynchronen Logikbausteins 14b getrennt aufgebaut ist.

Die beiden Bausteine sind durch einen bidirektionalen Datenbus 32 verbunden. Baustein 14a ist mit einem externen Oszillator bzw. Taktgeber 36 am Anschluss 37 verbunden, den er für die synchrone Logik benötigt. Neben seinem Anschluss für die negative Versorgung 6 und die Versorgungsspannung 5a benötigt er keine weiteren Anschlüsse, da die gesamte Funktion über den Datenbus abgewickelt wird, mit dem er den asynchronen LogikBaustein 14b steuert. Natürlich kann der hier extern gezeichnete Taktgeber auch Bestandteil des synchronen Bausteins 14a sein.

Die Versorgungsspannung wird über einen Spannungsregler geregelt, der sich im asynchronen Baustein 14b befindet, und über dessen Ausgangsleitung 5b abgegeben, an den ein Glättungskondensator 22 angeschlossen ist. Während der synchrone Baustein so mit einer geregelten Spannung am Eingang 5a versorgt wird, bezieht der asynchrone Logikbaustein 14b seine Versorgung direkt aus den Leitungen 17 und 18a bzw. 18b. Da dieser Baustein vorzugsweise in CMOS Technologie ausgeführt ist und daher extrem wenig Strom verbraucht, weist er ein eigenes, von dem des synchronen Logikbausteins getrenntes Versorgungsnetzwerk auf, bestehend aus den Dioden 33a und 33b sowie dem Speicherelement 35. Dieses Netzwerk bezieht seine Versorgung immer aus den Leitungen 17 und 18b bzw. 18a, wobei immer nur Ladung aus der Leitung bezogen wird, wenn die Spannung zwischen den Leitungen 17 und 18 grösser ist als die im Speicherelement 35 ist, ähnlich wie an Hand der Fig. 6 beschrieben wurde. Wegen des niedrigen Stromverbrauchs von Baustein 14b führt dies zu keiner wesentlichen Beeinträchtigung der Leistungsdaten des Systems. Natürlich kann auch hier eine geschaltete Zuführung der Versorgung angewandt werden, wie im vorigen beschrieben (Fig. 1 bzw. Fig. 6). Dies wird jedoch im allgemeinen wegen des möglichen extrem niedrigen Stromverbrauchs des Bausteins nicht nötig sein.

Über seinen Eingang 34 bezieht der asynchrone Logikbaustein 14b die Spannung zur Versorgung des synchronen Bausteins 14b (über Leitung 5a/5b). Er ist über seinen Eingang 6 an die negative Leitung 17 angeschlossen. Vorzugsweise enthält der Baustein 14b auch die Treiberschaltungen zur Ansteuerung der Schalter 2a und 2b sowie 25. Dies erfolgt über seine Ausgänge 7 und 27. Diese sowie die Dioden 1a und 1b haben dieselben Funktionen wie in der vorherigen Beschreibung. Im vorliegenden Ausführungsbeispiel wird nur der Treiber auf einen Befehl des synchronen Bausteins 14a hin gesteuert, den dieser über den Bus 32 übermittelt. Am Eingang des Datenbusses 32 des asynchronen Bausteins 14b befindet sich daher zweckmässig ein Umsetzer der logischen Spannungsniveaus zwischen der Spannung 5a und den internen logischen Spannungsniveaus von 14b, die im allgemeinen von dessen Versorgungsspannung am Eingang 38 abhängen werden. Über den bidirektionalen Bus 32 sendet der Baustein 14b auch Zustandsmeldungen an den synchronen Logikbaustein 14a, den dieser benötigt, um die Datenflusskontrolle zu steuern.

Die Modulatorschaltung 19 und 20 (Fig. 6) kann auch im asynchronen Logikbaustein 14b enthalten sein. In diesem Fall muss dieser natürlich auch Anschlüsse aufweisen, die ihn mit den Leitungen 18a und 18b direkt verbinden. Im Ausführungsbeispiel der Fig. 7 wurde eine Variante wie in Fig. 4 gewählt, wo diese Anschlüsse nicht nötig sind, und die Modulation über den gemeinsamen Anschluss 38 erfolgt. Die Art und Signalform der Modulation wird durch den synchronen Logikbaustein 14a über den Datenbus 32 gesteuert.

Die Erfassung des jeweiligen logischen Zustands erfolgt im asynchronen Logikbaustein 14b über seine Eingänge 3a und 3b, die durch Spannungsteiler 12a, 12b und 31a 13b an die Leitungen 17, 18 angeschlossen sind.

Es versteht sich von selbst, dass die meisten Bauteile der Fig. 7 auch Bestandteil des asynchronen Logikbausteins sein können; insbesondere 33a, 33b, 12a, 12b, 13a, 13b sowie auch der Schalter 25.

## Patentansprüche

1. Adressierbare Knoteneinheit (30) mit Anschlüssen (15a, 15b, 16) für wenigstens zwei Leitungen (17, 18a, 18b), über welche die Knoteneinheit (30) adressierbar ist, welche Anschlüsse (15a, 15b, 16) mit einer ein Adressiersignal auswertenden Schaltung (14) verbunden sind, der zwei zwischen der jeweiligen Leitung (18a, 18b) *von Dioden (1a, 1b) mit gemeinsamer Kathode (K)* überbrückte Schalter (2a, 2b) zugeordnet sind, so dass ein Signalfluss in der Leitung (18a, 18b) in zwei Richtungen ermöglicht ist, wobei die Knoteneinheit (30) mindestens eine Stromquelle (4, 22) aufweist, die über mindestens eine der Leitungen (17, 18a, 18b) mit Strom versorgbar ist, **dadurch gekennzeichnet, dass** zwischen der auswertenden Schaltung (14) und dem entsprechenden Leitungsanschluss (15a, 15b) ein Schalter (25) *an die gemeinsamen Kathoden (K) der beiden Dio*den (1a, 1b) *gelegt* ist, der nach einer Adressierung zu öffnen ist, so dass die Stromversorgung der auswertenden Schaltung (14) nach der Adressierung durch die mindestens eine Stromquelle (4, 22) gesichert ist *und Daten zwischen der auswertenden Schaltung (14) und der Knoteneinheit (30) austauschbar sind.*

2. Knoteneinheit nach Anspruch 1, **dadurch gekennzeichnet, dass** *die auswertende Schaltung (14) zwei Teile (14a, 14b) aufweist, wovon der eine Teil als synchrone Logik ausgeführt ist, die über ein Taktsignal eines Taktgebers (36) verfügt, wogegen der andere Teil (14b) asynchrone Logik-Funktionen enthält und vorzugsweise ein eigenes, von dem des synchronen Logikbausteins getrenntes Versorgungsnetzwerk aufweist, bestehend aus Dioden (33a, 33b) sowie einem Stromspeicherelement (35) und* so *seine Versorgung direkt aus den Leitungen (17, 18a bzw. 18b) bezieht, wobei Ladung aus den Leitungen (17, 18a bzw. 18b) beziehbar ist, wenn die Spannung zwischen den Leitungen (17, 18a bzw. 18b) grösser ist als die im Speicherelement (35)*.

3. Knoteneinheit nach Anspruch 1 oder 2, **dadurch gekennzeichnet, dass** der *an die gemeinsamen Kathoden (K) der beiden Dioden* (1a, 1b) *gelegte* Schalter (25) ein Transistorschalter ist, vorzugsweise ein MOS-Transistor.

4. Knoteneinheit nach einem der vorhergehenden Ansprüche, **dadurch gekennzeichnet, dass** sie mit zwei Signalfühlern (12, 13) für Signale aus zwei unterschiedlichen Richtungen (A, B) ausgebildet ist, und dass vorzugsweise die auswertende Schaltung (14) mit mindestens einem Steuerausgang (7a, 7b) zum Umschalten der Richtung von Senden und Empfang ausgebildet ist und/oder dass sie zur Abgabe von Signalen in beide Richtungen mit einem Transistor (20) mit je einer Kollektorleitung (20a, 20b) für je eine der Richtungen (A, B) versehen ist.

5. Knoteneinheit nach einem der vorhergehenden Ansprüche, **dadurch gekennzeichnet, dass** sie mindestens einen, vorzugsweise zwei, Signalfühler (12, 13) aufweist, der - unabhängig von dem besagten Schalter (25) - ständig mit den Leitungen (17, 18a, 18b) verbunden ist.

6. Verfahren zum Adressieren einer von mindestens zwei Knoteneinheiten (80-1 bis 80-8, 81) durch mindestens einen Controller (70a, 70b), wobei für die Adressierung von einem Controller (70a) ein erstes Signal (U1) abgegeben wird, welches an die erste Knoteneinheit (80-1) gelangt, in welcher das erste Signal der auswertenden Schaltung (14) zugeführt, hingegen die Weitervermittlung dieses ersten Signals (U1) an die zweite Knoteneinheit (80-2) unterbrochen wird, worauf der Controller (70a) ein zweites, vom ersten verschiedenes Signal (U2) abgibt, womit die Verbindung zur nächsten Knoteneinheit (80-2) hergestellt wird, so dass das adressierende erste Signal (U1) des Controllers (70a) nun die zweite Knoteneinheit (80-2) adressiert, wobei zuletzt mit einem Resetsignal (46b) die nächste Adressierung wieder hergestellt wird, **dadurch gekennzeichnet, dass** für die Adressierung der jeweils nächsten Knoteneinheit gleichzeitig oder zuvor aber der Adressiersignalweg zur auswertenden Schaltung (14) der ersten Knoteneinheit (80-1) durch einen *an die gemeinsamen Kathoden (K) der beiden Dioden* (1a, 1b) *gelegten* Schalter (25) zwischen der auswertenden Schaltung (14) und dem entsprechenden Leitungsanschluss (15a, 15b), der nach einer Adressierung zu öffnen ist, unterbrochen wird, so dass das adressierende erste Signal (U1) des Controllers (70a) nun die zweite Knoteneinheit (80-2) adressiert, und dass zuletzt die Verbindung zwischen Controller (70a) und auswertender Schaltung (14) der ersten Knoteneinheit (80-1) mit dem Resetsignal (46b) für die nächste Adressierung wieder hergestellt wird.

7. Verfahren nach Anspruch 6, **dadurch gekennzeichnet, dass** mindestens das erste Signal (U1) ein *Spannungssignal* ist, wobei im Falle, dass auch das zweite Signal (U2) ein Spannungssignal ist, *und* die Amplituden *der beiden Signale* unterschiedlich sind.

8. Verfahren nach Anspruch 6 oder 7, **dadurch gekennzeichnet, dass** der Strom des Adressiersignales dem mindestens einen Stromspeicher (4, 22) zur Aufladung desselben zugeführt wird.

9. Verfahren nach einem der Ansprüche 6 bis 8, **dadurch gekennzeichnet, dass** zur Weiterleitung der Adressierung von einer Knoteneinheit (80-1) zur anderen (80-2) jede Knoteneinheit neben dem besagten Schalter (25) noch zwei weitere, von Dioden mit gemeinsamer Kathode (K) überbrückte Schalter (2a, 2b) aufweist, wobei der besagte Schalter (25) an dem gemeinsamen Kathodenpunkt (K) liegt, und dass die Betätigung dieser weiteren Schalter (2a, 2b, 25) zur Aufladung mindestens eines Stromspeichers (4, 22) zeitverzögert erfolgt.

## Claims

1. An addressable node unit (30) including connections (15a, 15b, 16) for at least two lines (17, 18a, 18b) via which the node unit (30) is addressable, which connections (15a, 15b, 16) are connected to a circuit (14) evaluating an addressing signal and associated with two switches (2a, 2b) bridged between the respective line (18a, 18b) by diodes (1a, 1b) sharing a cathode (K), so that a signal flow is enabled in the lines (18a, 18b) in two directions, wherein the node unit (30) comprises at least one power source (4, 22) to which power can be supplied via at least one of said lines (17, 18a, 18b), **characterized in that** between the evaluating circuit (14) and the respective line connection (15a, 15b) a switch (25) is connected to the cathodes (K) shared by the two diodes (1a, 1b), which switch is to be opened after addressing such that the power supply of the evaluating circuit (14) is ensured by the at least one power source (4, 22) after addressing and data are exchangeable between the evaluating circuit (14) and the node unit (30).

2. A node unit according to claim 1, **characterized in that** the evaluating circuit (14) comprises two parts (14a, 14b), the first part of which is configured as a synchronous logic comprising a clock signal of a clock generator (36), whereas the other part (14b) contains asynchronous logic functions and preferably comprises its own supply network separated from that of the synchronous logic component and comprised of diodes (33a, 33b) and a power storage element (35), thus directly obtaining its supply from said lines (17, 18a and 18b, respectively), wherein charge is obtainable from said lines (17, 18a and 18b, respectively), if the voltage between said lines (17, 18a and 18b, respectively) is larger than that in the storage element (35).

3. A node unit according to claim 1 or 2, **characterized in that** the switch (25) connected to the cathodes (K) shared by the two diodes (1a, 1b) is a transistor switch, preferably a MOS transistor.

4. A node unit according to any one of the preceding claims, **characterized in that** it is formed with two signal probes (12, 13) for signals from two different directions (A, B), and that the evaluating circuit (14) is preferably formed with at least one control output (7a, 7b) for changing the directions of transmission and reception, and/or that, for emitting signals in both directions, it is provided with a transistor (20) with one collector line (20a, 20b) each for each one of the two directions (A, B).

5. A node unit according to any one of the preceding claims, **characterized in that** it comprises at least one, preferably two, signal probe(s) (12, 13), which is/are permanently connected to said lines (17, 18b, 18b) independently of said switch (25).

6. A method for addressing one of at least two node units (80-1 to 80-8, 81) by at least one controller (70a, 70b), wherein, for addressing a controller (70a), a first signal (U1) is emitted, which reaches the first node unit (80-1), in which the first signal is fed to the evaluating circuit (14) whereas forwarding of said first signal (U1) to the second node unit (80-2) is interrupted, whereupon the controller (70a) emits a second signal (U2) different from the first signal so as to establish a connection to the next node unit (80-2) such that the addressing first signal (U1) of the controller (70a) then addresses the second node unit (80-2), wherein the next addressing is finally restored by a reset signal (46b), **characterized in that**, for addressing the respectively next node unit, the addressing signal path to the evaluating circuit (14) of the first node unit (80-1) is, however, simultaneously or previously interrupted by a switch (25) connected to the cathodes (K) shared by the two diodes (1a, 1b) between the evaluating circuit (14) and the respective line connection (15a, 15b), which is to be opened after addressing, so that the addressing first signal (U1) of the controller (70a) then addresses the second node unit (80-2), and that finally the connection between the controller (70a) and the evaluating circuit (14) of the first node unit (80-1) is restored by the reset signal (46b) for the next addressing.

7. A method according to claim 6, **characterized in that** at least the first signal (U1) is a voltage signal, wherein, in the event that also the second signal (U2) is a voltage signal, and the amplitudes of the two signals are different.

8. A method according to claim 6 or 7, **characterized in that** the flow of the addressing signal is fed to the at least one power storage (4, 22) for charging the latter.

9. A method according to any one of claims 6 to 8, **characterized in that** for forwarding the addressing from one node unit (80-1) to the other (80-2), each node unit in addition to said switch (25) comprises two further switches (2a, 2b) bridged by diodes sharing a cathode (K), wherein said switch (25) is located on the shared cathode point (K), and that the activation of said further switches (2a, 2b, 25) is performed in a time-delayed fashion for charging at least one power storage (4, 22).

## Revendications

1. Unité de noeud (30) adressable avec des raccords (15a, 15b, 16) pour au moins deux lignes (17, 18a, 18b), par lesquelles l'unité de noeud (30) est adressable, lesquels raccords (15a, 15b, 16) sont reliés à un circuit (14) évaluant un signal d'adressage, auquel sont associés deux commutateurs (2a, 2b) pontés entre la ligne respective (18a, 18b) par des diodes (1a, 1b) avec une cathode commune (K) de sorte qu'un flux de signal dans la ligne (18a, 18b) soit permis dans deux sens, dans laquelle l'unité de noeud (30) présente au moins une source de courant (4, 22) qui peut être alimentée en courant par au moins une des lignes (17, 18a, 18b), **caractérisée en ce qu'**entre le circuit (14) d'évaluation et le raccord de ligne (15a, 15b) correspondant, un commutateur (25) est posé sur les cathodes (K) communes des deux diodes (1a, 1b), lequel est à ouvrir après un adressage de sorte que l'alimentation en courant du circuit (14) d'évaluation soit assurée après l'adressage par l'au moins une source de courant (4, 22) et des données peuvent être échangées entre le circuit (14) d'évaluation et l'unité de noeud (30).

2. Unité de noeud selon la revendication 1, **caractérisée en ce que** le circuit (14) d'évaluation présente deux parties (14a, 14b), dont l'une partie est réalisée comme une logique synchrone qui dispose d'un signal d'horloge d'une horloge (36), alors que l'autre partie (14b) contient des fonctions de logique asynchrone et présente de préférence un réseau d'alimentation propre séparé du module de logique synchrone, se composant de diodes (33a, 33b) ainsi qu'un élément accumulateur de courant (35) et ainsi tire son alimentation directement des lignes (17, 18a ou 18b), dans laquelle la charge peut être tirée des lignes (17, 18a ou 18b) si la tension entre les lignes (17, 18a, 18b) est plus grande que celle de l'élément accumulateur (35).

3. Unité de noeud selon la revendication 1 ou 2, **caractérisée en ce que** le commutateur (25) posé sur les cathodes (K) communes des deux diodes (1a, 1b) est un commutateur de transistor, de préférence un transistor MOS.

4. Unité de noeud selon l'une des revendications précédentes, **caractérisée en ce qu'**elle est réalisée avec deux capteurs de signal (12, 13) pour des signaux provenant de deux différents sens (A, B) et **en ce que** de préférence le circuit (14) d'évaluation est réalisé avec au moins une sortie de commande (7a, 7b) pour la commutation du sens d'envoi et de réception et/ou **en ce qu'**elle est pourvue pour la sortie de signaux dans les deux sens d'un transistor (20) chaque fois d'une ligne de collecteur (20a, 20b) pour chacun des sens (A, B).

5. Unité de noeud selon l'une des revendications précédentes, **caractérisée en ce qu'**elle présente au moins un, de préférence deux capteurs de signal (12, 13), qui est relié indépendamment dudit commutateur (25), en permanence aux lignes (17, 18a, 18b).

6. Procédé d'adressage d'une des au moins deux unités de noeud (80-1 à 80-8, 81) par au moins un élément de commande (70a, 70b), dans lequel pour l'adressage d'un élément de commande (70a), un premier signal (U1) est émis, lequel parvient à la première unité de noeud (80-1), dans laquelle le premier signal est transmis au circuit (14) d'évaluation ; alors que la retransmission de ce premier signal (U1) à la seconde unité de noeud (80-2) est interrompue, suite à quoi l'élément de commande (70a) émet un second signal (U2) différent du premier, avec lequel la liaison à l'unité de noeud suivante (80-2) est établie, de sorte que le premier signal (U1) d'adressage de l'élément de commande (70a) adresse maintenant la seconde unité de noeud (80-2), dans lequel enfin, avec un signal de réinitialisation (46b) l'adressage suivant est rétabli, **caractérisé en ce que** pour l'adressage de l'unité de noeud suivante respectivement, cependant la course de signal d'adressage au circuit (14) d'évaluation de la première unité de noeud (80-1) est interrompue simultanément ou avant par un commutateur (25) posé sur les cathodes (K) communes des deux diodes (1a, 1b) entre le circuit (14) d'évaluation et le raccord de ligne (15a, 15b) correspondant qui est à ouvrir après un adressage, de sorte que le premier signal (U1) d'adressage de l'élément de commande (70a) adresse maintenant la seconde unité de noeud (80-2) et **en ce qu'**enfin, la liaison entre l'élément de commande (70a) et le circuit (14) d'évaluation de la première unité de noeud (80-1) avec le signal de réinitialisation (46b) est rétablie pour l'adressage suivant.

7. Procédé selon la revendication 6, **caractérisé en ce qu'**au moins le premier signal (U1) est un signal de tension, dans lequel au cas où le second signal (U2) est aussi un signal de tension, et les amplitudes des deux signaux sont différentes.

8. Procédé selon la revendication 6 ou 7, **caractérisé en ce que** le courant du signal d'adressage est transmis à l'au moins un accumulateur de courant (4, 22) pour la charge de celui-ci.

9. Procédé selon l'une des revendications 6 à 8, **caractérisé en ce que** pour la transmission de l'adressage d'une unité de noeud (80-1) à l'autre (80-2), chaque unité de noeud présente, à côté dudit commutateur (25), encore deux autres commutateurs (2a, 2b) pontés par des diodes avec une cathode commune (K), dans lequel ledit commutateur (25) se trouve sur le point de cathode commun (K) et **en ce que** l'actionnement de ces autres commutateurs (2a, 2b, 25) est effectué pour la charge d'au moins un accumulateur de courant (4, 22) de manière différée.
